# EUROPÄISCHE PATENTSCHRIFT

(11) **EP 3 513 239 B1**
(45) Veröffentlichungstag und Bekanntmachung des Hinweises auf die Patenterteilung: **06.11.2024**
(21) Anmeldenummer: 17777807.3
(22) Anmeldetag: 15.09.2017
(51) Int. Cl.: G02B 26/02, G02B 26/06

(54) **OPTISCHE ANORDNUNG ZUR ERZEUGUNG VON LICHTFELDVERTEILUNGEN UND VERFAHREN ZUM BETRIEB EINER OPTISCHEN ANORDNUNG**
OPTICAL ARRANGEMENT FOR GENERATING LIGHT FIELD DISTRIBUTIONS AND METHOD FOR OPERATING AN OPTICAL ARRANGEMENT
SYSTÈME OPTIQUE PERMETTANT DE PRODUIRE DES RÉPARTITIONS DE CHAMP LUMINEUX ET PROCÉDÉ PERMETTANT DE FAIRE FONCTIONNER UN SYSTÈME OPTIQUE

(30) Priorität: 16.09.2016 DE 102016217785
(43) Veröffentlichungstag der Anmeldung: 24.07.2019
(73) Patentinhaber: Fraunhofer-Gesellschaft zur Förderung der angewandten Forschung e.V., 80686 München (DE); Technische Universität Dresden, 01069 Dresden (DE)
(72) Erfinder: HEBER, Jörg, 01099 Dresden (DE); ROTH, Matthias, 01219 Dresden (DE); JANSCHEK, Klaus, 01328 Dresden (DE)
(74) Vertreter: Burger, Markus
(86) Internationale Anmeldenummer: PCT/EP2017/073315
(87) Internationale Veröffentlichungsnummer: WO 2018/050840

(56) Entgegenhaltungen:
- EP-A1- 2 073 198
- WO-A1-2012/084752
- WO-A2-2008/001137
- US-A1- 2009 195 857
- US-A1- 2014 118 645
- US-A1- 2015 205 262

## Beschreibung

Ein Ausführungsbeispiel der vorliegenden Erfindung bezieht sich auf eine optische Anordnung zur Erzeugung von Lichtfeldverteilungen. Ein weiteres Ausführungsbeispiel bezieht sich auf ein Verfahren zum Betrieb einer optischen Anordnung. Ein weiteres Ausführungsbeispiel bezieht sich auf ein Verfahren zur Modulation von Licht in Amplitude und Phase unter Nutzung der nullten Beugungsordnung. Ein weiteres Ausführungsbeispiel bezieht sich auf die ein Verfahren zur Modulation von Licht in Amplitude und Polarisation. Ein weiteres Ausführungsbeispiel bezieht sich auf die ein Verfahren zur Modulation von Licht in Amplitude, Phase und Polarisation.

### Hintergrund der Erfindung

Flächenlichtmodulatoren (engl. "spatial light modulators", Abk.: SLMs) sind programmierbare, optische Bauelemente, welche Lichtfeldern eine räumliche Modulation aufprägen. SLMs bestehen aus Modulatorzellen (Pixeln) mit jeweils einem einstellbaren Parameter, welche häufig durch eine elektrische Spannung gesteuert wird. Lichtfelder werden in ihrer Wellennatur im Allgemeinen im komplexen Zahlenraum, vektoriell beschrieben. Beispielsweise kann eine Amplitude durch einen Phaseneffekt beeinflusst werden. Alternativ dazu kann der Flächenlichtmodulator auch in anderer Weise realisiert sein, wie zum Beispiel durch eine Flüssigkristall-Struktur.

Sogenannte komplexwertige Flächenlichtmodulation stellt simultan sowohl die Amplitude als auch die Phase einer Lichtquelle ein. Diese vektorielle Lichtmodulation ist allerdings nur mit zusätzlichem Systemaufwand über konventionelle Lichtmodulatoren realisierbar.

Der Stand der Technik zur komplexwertigen Lichtmodulation teilt sich in zwei Kategorien - einerseits sequenzielle Abbildung auf zwei spezialisierte programmierbare Modulatoren (z.B. Amplitude und Phase) [1]. Andererseits kann ein einzelner Modulator genutzt werden. Man definiert dann Pixelgruppen (Makropixel), innerhalb derer die komplexe Funktion auf mehrere Pixel verteilt wird (Makropixelmethoden).

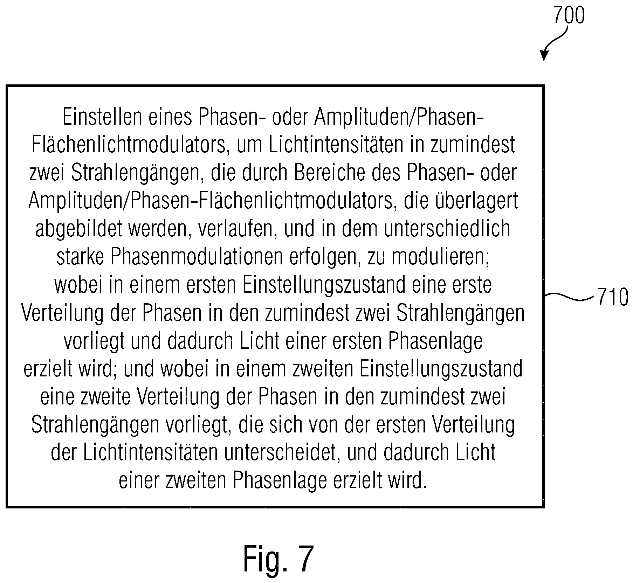

Makropixelmethoden zur komplexwertigen Modulation basieren auf der Lee Holografie [2], welche die Nutzung eines Amplitudenmodulators für die Phasenmodulation ermöglicht. Die Arbeit von van Putten et al. [3] erweitert das Konzept von Lee zur komplexen Modulation. Sowohl Lee als auch van Putten et al. nutzen die erste Beugungsordnung eines in den SLM programmierten Musters (siehe Fig. 7). Dazu kippt man den Modulator um den Winkel ϕ und erhält unterschiedliche Phasenzuordnungen der Pixel innerhalb einer komplexen Modulationszelle (Makropixel).

In Fig. 7 ist das Konzept nach van Putten et al. dargestellt, dieses nutzt die erste Beugungsordnung eines in den SLM programmierten Musters [3]. Alle weiteren Beugungsordnungen werden von der Blende vom optischen Pfad ausgeschlossen. Die Position des ersten Beugungsmaximums in der Fokusebene ist linear von der Wellenlänge λ abhängig. Alle Beugungsordnungen mit Ausnahme der ersten werden vom optischen Pfad mittels einer Blende ausgeschlossen. Die Blende bewirkt gleichzeitig eine optische Tiefpassfilterung, sodass sich die Beiträge der Pixel in einer Modulationszelle zu einem komplexen Wert überlagern.

Alternativ existiert auch ein Konzept, mit dem ein komplexes Feld mit einem Phasenmodulator mit diskreten Pixeln erzeugt werden kann [4]. Durch Überlagerung zweier phasenmodulierter Vektoren wird der gesamte Phasenraum abgedeckt.

Weiterhin existiert ein Bauteilkonzept, welches komplexe Modulation mittels der fertigungstechnischen Abänderung eines reflektiven Kippspiegel-SLMs erlaubt [5].

Die Quelle [10] beschreibt eine voll-komplexe örtliche Filterung mit einem sogenannten "phase mostly deformable mirror device", also einem phasenbeeinflussenden, im Wesentlichen defomierbaren Spiegelbauteil.

In Anbetracht dessen besteht der Wunsch, ein neuartiges Konzept zur komplexwertigen Modulation eines Lichtfeldes zu schaffen, das es ermöglicht, einen verbesserten Kompromiss aus fertigungstechnischen Anforderungen, Verfügbarkeit der verwendeten Bauelemente und Auflösung des komplexwertigen Lichtfeldes bzw. die Möglichkeit der Verwendung eines Systems zur Modulation unterschiedlicher Lichtwellenlängen zu erzielen.

Die Druckschrift US 2009/195 857 A1 bezieht sich auf eine Vorrichtung für elektronisch gesteuerte Hologramme, bei der eine Mikrospiegel- oder LCD-Array-Vorrichtung komplexe optische oder elektrooptische Transformationen durchführt.

Die Druckschrift WO 2008/001 137 A2 bezieht sich auf ein Verfahren, eine Vorrichtung und einen Computerprogrammcode für Techniken für holografische Bildanzeigesysteme, wobei eine gepixelte Hologramm-Anzeigevorrichtung mit einer durch Phasenmaskendaten repräsentierten Phasenmaske versehen ist.

Die Druckschrift EP 2073198 A1 bezieht sich auf eine optische Informationsaufzeichnungsvorrichtung und ein Verfahren zum Aufzeichnen von Informationen als Hologramm in einem optischen Informationsaufzeichnungsmedium.

Die Druckschrift US 2015/205262 A1 beschreibt Vorrichtungen mit komplexen räumlichen Lichtmodulatoren, die in der Lage sind, sowohl eine Phase als auch eine Amplitude von Licht zu modulieren und auf dreidimensionale Bildanzeigen, die die komplexen räumlichen Lichtmodulatoren enthalten.

Die Druckschrift US 2014/118645 A1 bezieht sich auf einen komplexen räumlichen Lichtmodulator zum Modulieren sowohl der Phase als auch der Amplitude von Licht und eine dreidimensionale Bildanzeigevorrichtung, die denselben enthält.

Die Druckschrift WO 2012 084752 A1 betrifft Verfahren zur Verbesserung von reflektierenden mikromechanischen SLMs, für Anwendungen mit einer Achromatisierung von diffraktiven SLMs.

### Zusammenfassung der Erfindung

Ein Ausführungsbeispiel der vorliegenden Erfindung schafft eine optische Anordnung zur Erzeugung von Lichtfeldverteilungen, die (zum Beispiel räumlich und/oder zeitlich) mit variierender Amplitude und Phase einstellbar sind. Die optische Anordnung umfasst einen programmierbaren Flächenlichtmodulator (beispielsweise mit einen oder mehreren Kippspiegeln oder mit einem oder mehreren Senkspiegeln), ein Phasenelement (auch als Phasenmodulator bezeichnet) und ein optisches System. Das Phasenelement ist ausgelegt, um mindestens zwei oder mehr Phasenbeiträge auf benachbarten Modulatorpixeln (Modulator-Bildpunkten, bzw. Modulator-Subbildpunkten) zu bewirken (also beispielsweise zwei verschiedene Phasenbeiträge zu Lichtanteilen von benachbarten Modulator-Bildpunkten oder Modulator-Subbildpunkten hinzuzufügen). Das optische System ist ausgelegt, um mehrere Bereiche (zum Beispiel, Modulator-Bildpunkte oder Modulator-Subbildpunkte) des Flächenlichtmodulators überlagert abzubilden. Der Flächeniichtmodulator und das Phasenelement sind innerhalb einer Schärfentiefe einer Ebene, oder konjugierter optischer Maskenebenen angeordnet (also beispielsweise nahe benachbart oder zumindest näherungsweise in zueinander konjugierten Ebenen), so dass beispielsweise ein Bereich des Phasenelements einem Sub-Bildpunkt des Flächenlichtmodulators zugeordnet ist, oder so dass beispielsweise eine 1-zu1 Zuordnung zwischen Bereichen des Phasenelements und Sub-Bildpunkten des Flächenlichtmodulators besteht, oder so dass beispielsweise ein Sub-Bildpunkt festlegt, welche Lichtamplitude auf einen zugeordneten Bereich des Phasenelements fällt). Die optische Anordnung ist ausgelegt, um in einer folgenden Bildebene einen vorgebbaren komplexen Lichtwert zu erreichen.

Durch das Phasenelement kann erzielt werden, dass durch die unterschiedliche Veränderung der Phasen der unterschiedlichen Lichtbeiträge der jeweilige Strahlengang in einer komplexwertigen Ebene ausgerichtet werden kann.

Damit ist mit der Erfindung die Möglichkeit gegeben, ein komplexwertiges Lichtfeld zu erzeugen, das in Betrag und Phase eingestellt werden kann. Die Amplitude im Bildraum wird im Allgemeinen durch eine Kombination aus Phasenelement und Flächenlichtmodulator bestimmt. Eine weitere Eigenschaft der erfindungsgemäßen Lösung liegt in der Eigenschaft des optischen Systems, dass dieses mehrere Bereiche des Flächenlichtmodulators (auch als Flächenlichtmodulator-Einzelelemente oder Flächenlichtmodulator-Subbildpunkte bezeichnet) überlagert abbildet, wobei die verschiedenen Bereiche, die überlagert werden, durch eine Beeinflussung des Phasenelements unterschiedliche Phasen aufweisen. Der Begriff "Flächenlichtmodulator-Einzelelemente" wird hierin manchmal synonym mit dem Begriff "Bereiche" verwendet.

Somit können durch ein Veränderung der Einstellungen von mehreren Bereichen des Flächenlichtmodulators die (relativen) Phasen (und optional auch noch die relativen Intensitäten) von Lichtbeiträgen unterschiedlicher Phasenlage in einem einzelnen Pixel verändert werden, ohne dass das Phasenelement bzw. dessen Einstellung geändert werden muss, wobei durch die Einstellung der relativen Phasen (und optional auch der Intensitäten) der Lichtbeiträge, die unterschiedliche Bereiche des Phasenelements durchlaufen, eine resultierende Phasenlage des Pixels (und in machen Ausführungsbeispielen auch eine resultierende Amplitude) festgelegt werden kann. Dabei kann der Flächenlichtmodulator "hart" zwischen Lichtbeiträgen unterschiedlicher Phasenlage umschalten und/oder eine Kombination von Lichtbeiträgen unterschiedlicher Phasenlage erzielen (wodurch eine noch feinere Einstellung einer resultierenden Phasenlage möglich ist).

Somit kann das statische (oder quasistatische) Phasenelement so verwendet werden, dass bei einer konstanten Lichtwellenlänge die Phasenbeeinflussung durch eine Ansteuerung bzw. Umschalten verschiedener Bereiche des Flächenlichtmodulators und ergänzend durch das Phasenelement erfolgt und dass die Einstellung des Phasenelements allenfalls bei einer Veränderung der Lichtwellenlänge verändert wird. Durch die Verwendung unterschiedlicher Lichtpfade mit unterschiedlichen Phasenmodulationen, die alle zu einem Pixel bzw. Bildpunkt gehören, kann dadurch der Flächenlichtmodulator besonders einfach gestaltet werden, da beispielsweise ein Phasen-Einstellbereich des Flächenlichtmodulators vergleichsweise klein gewählt werden kann. Das Phasenelement ergänzt also die phasenbeeinflussende Funktion des Flächenlichtmodulators. Beispielsweise kann eine Grob-Einstellung einer Phasenlage durch das Phasenelement erfolgen, während eine Feineinstellung der Phasenlage durch den Flächenlichtmodulator erfolgen kann. Mehrere gleichartige Einzelelemente des Flächenlichtmodulators können somit gemeinsam verwendet werden und es ist ausreichend, dass die Einzelelemente vergleichsweise kleine Phasenänderungen bewirken. Somit muss - anders als bei herkömmlichen Anordnungen - ein Einzelelement nicht einen Phaseneinstellbereich von 2π abdecken. Im Übrigen kann die Verwendung des Phasenelements einen erzielbaren Einstellbereich eines einzelnen Phasen- oder Amplituden-Phasenmodulatorelements deutlich verändern und beispielsweise eine Erzielung eines Phasensprungs von 180 Grad erleichtern oder ermöglichen.

Gemäß einem Ausführungsbeispiel der optischen Anordnung ist das optische System ausgelegt, um mehrere benachbarte Bereiche des Flächenlichtmodulators überlagert abzubilden. Dies bietet den Vorteil, dass die Lichtbeiträge der unterschiedlichen Strahlengänge, die durch das optische System überlagert abgebildet werden, interferieren können.

Gemäß einem Ausführungsbeispiel der optischen Anordnung ist das optische System ausgelegt, um mehrere Bereiche oder mehrere benachbarte Bereiche des Flächenlichtmodulators als eine komplexe Modulationszelle abzubilden. Dies bietet den Vorteil, dass durch den Beitrag bzw. den Lichtbeitrag der verschiedenen Bereiche, die vorteilhafterweise benachbart sind, ein (Summen-)Licht erzeugt werden kann, das ein Ergebnis der Überlagerung der Phasen und Amplituden der unterschiedlichen Lichtbeiträge ist. Beispielsweise kann das Licht eines Bildpunktes (Pixels) durch die verschiedenen Bereiche der komplexen Modulationszelle (die als Sub-Pixei bzw. Sub-Biidpunkte verstanden werden können), die überlagert abgebildet werden, bestimmt werden.

Gemäß einem weiteren Ausführungsbeispiel der optischen Anordnung weist das optische System ein optisches Tiefpassfilter auf. Dabei ist das optische Tiefpassfilter ausgelegt, um mehrere Bereiche oder mehrere benachbarte Bereiche des Flächenlichtmodulators zu einer komplexen Modulationszelle zu überlagern bzw. um Lichtbeiträge von mehreren Bereichen des Flächenlichtmodulators zu einem Bildpunkt zu überlagern. Dies bietet den Vorteil, dass durch das optische Tiefpassfilter ein Summen-Licht erzeugt wird, das eine Phase und eine Amplitude aufweist, das durch den Flächenlichtmodulator und durch das Phasenelement eingestellt werden kann.

Gemäß einem weiteren Ausführungsbeispiel der optischen Anordnung weist das optische System eine Tiefpass-Blende auf. Diese Tiefpass-Blende ist ausgelegt, um mehrere Bereiche oder mehrere benachbarte Bereiche des Flächenlichtmodulators zu einer komplexen Modulationszelle zu überlagern. Dies bietet den Vorteil, dass durch die Tiefpass-Blende eine Funktion eines optischen Tiefpassfilters erzielt wird. Denkbar wäre hier auch eine einstellbare Tiefpass-Blende, die eine Änderung der Tiefpassfilter-Wirkung erzielbar macht.

Gemäß einem weiteren Ausführungsbeispiel der optischen Anordnung ist der Flächenlichtmodulator unter der Verwendung z.B. eines mikroelektromechanischen Systems oder einer analogen Kippspiegelanordnung oder einer digitalen Mikrospiegelanordnung oder einer Flüssigkristallanordnung gebildet. Dies bietet den Vorteil, dass für den Flächenlichtmodulator bekannte und kommerziell erhältliche Bauteile verwendet werden können. Digitale Mikrospiegelanordnungen (engl. "digital micro mirror device(s)", DMD(s)) oder Flüssigkristallanordnungen sind dabei Ausführungsbeispiele, die neben (alternativ zu) einer analogen Kippspiegelanordnung oder einem mikroelektromechanischen System vorteilhafterweise verwendet werden können.

Gemäß einem weiteren Ausführungsbeispiel der optischen Anordnung weist das Phasenelement eine zeitunveränderliche Beeinflussung der Phase auf. Dies lässt sich auch so formulieren, dass das Phasenelement statisch ist. Dies bietet den Vorteil, dass günstige Bauelemente für das Phasenelement verwendet werden können. Weiterhin kann ein Vorteil sein, dass durch diese statischen Phasenelemente eine sehr genaue Beeinflussung bzw. Einstellung der Phase möglich ist.

Gemäß einem weiteren Ausführungsbeispiel der optischen Anordnung wird das Phasenelement von einem Diffraktiven-Optischen-Element gebildet. Dies bietet den Vorteil, dass das Diffraktive-Optische-Elemente eine Beeinflussung bzw. Einstellung einer Phase in einer sehr hohen Genauigkeit ermöglichen kann.

Gemäß einem weiteren Ausführungsbeispiel der optischen Anordnung weist das Phasenelement eine Platte auf, wobei unterschiedliche Strahlengänge, die überlagert abgebildet werden, beeinflusst durch die Platte des Phasenelements eine unterschiedlich optische Weglänge durchlaufen. Dies bietet den Vorteil, dass es möglich ist, dass durch die unterschiedliche optische Weglänge eine Differenz der Phasen der unterschiedlichen Strahlengänge erzielt werden kann. Dies ermöglicht es, die Lichtbeiträge der unterschiedlichen Strahlengänge der unterschiedlichen Phasen in der komplexen Ebene zu platzieren.

Gemäß einem weiteren Ausführungsbeispiel der optischen Anordnung weist das Phasenelement eine Platte mit Bereichen unterschiedlicher Dicke auf. Dabei durchlaufen unterschiedliche Strahlengänge, die überlagert abgebildet werden, beeinflusst von den unterschiedlichen Dicken der Platte, eine unterschiedliche optische Weglänge. Dies bietet den Vorteil, dass die Lichtbeiträge ebenfalls in einer komplexen Ebene platziert werden können, wobei die unterschiedlichen Dicken der Bereiche der Platte fertigungstechnisch leicht herstellbar sein können.

Gemäß einem weiteren Ausführungsbeispiel der optischen Anordnung weist das Phasenelement eine Platte mit Bereichen mit unterschiedlichen Brechungsindizes auf. Dabei durchlaufen unterschiedliche Strahlengänge, die überlagert abgebildet werden, beeinflusst von den unterschiedlichen Brechungsindizes der Platte, eine unterschiedliche optische Weglänge. Dies bietet den Vorteil, dass ebenfalls durch diese Ausgestaltung eine Platzierung der Lichtbeiträge nach Betrag und Phase in der optischen Ebene ermöglicht ist.

Gemäß einem weiteren Ausführungsbeispiel der optischen Anordnung ist das Phasenelement ausgelegt, eine zeitveränderliche Beeinflussung der Phase zu ermöglichen. Dies lässt sich auch so formulieren, dass das Phasenelement nichtstatisch ist. Dies bietet den Vorteil, dass bei Änderung der zu erzielenden Genauigkeit oder bei Änderung einer verwendeten Lichtwellenlänge eine Anpassung des Phasenelements an die neuen Anforderungen möglich ist.

Gemäß einem weiteren Ausführungsbeispiel der optischen Anordnung ist das Phasenelement programmierbar. Dies lässt sich auch so formulieren, dass das Phasenelement einstellbar ist. Dies bietet den Vorteil, dass eine Änderung der Phasenänderung der Bereiche, je nach Anforderungen, auch während des Betriebs möglich ist.

Gemäß einem weiteren Ausführungsbeispiel der optischen Anordnung ist das Phasenelement ein Flüssigkristallphasenmodulator. Dies bietet den Vorteil, dass das Phasenelement zeitveränderlich ausgelegt sein kann und dieses auch während des Betriebs in seinen Eigenschaften beeinflusst werden kann.

Gemäß einem weiteren Ausführungsbeispiel der optischen Anordnung kann eine Änderung der Einstellung der Amplitude durch den Flächenlichtmodulator um einen Faktor 2 oder auch deutlich schneller als eine Änderung der Beeinflussung der Phase durch das Phasenelement. Dies bietet den Vorteil, dass in dieser Realisierung ein Kompromiss bei der Bildwiederholrate nicht notwendigerweise erzwungen ist, da durch den primären SLM (Flächenlichtmodulator) mit schneller Modulatortechnologie gearbeitet werden kann. Hierbei sei nochmals auf eine Eigenschaft hingewiesen, die bereits weiter oben erwähnt wurde. Es kann hierbei ein statisches (oder quasistatisches) Phasenelement verwendet werden, sodass bei einer konstanten Lichtwellenlänge die Phasenbeeinflussung alleine durch eine Ansteuerung bzw. Umschalten verschiedener Bereiche des Flächenlichtmodulators erfolgt und dass die Einstellung des Phasenelements allenfalls bei einer Veränderung der Lichtwellenlänge verändert wird. Auch wäre es möglich, die Einstellung des Phasenelements zu ändern, wenn bekannt ist, dass die Phase eines (Gesamt-)Lichtes einer komplexen Modulationszelle in einem längeren Zeitraum nur einen bestimmten, eingeschränkten Winkelbereich abdecken muss. Dadurch kann beispielsweise eine Verbesserung der Genauigkeit der Phase erzielt werden.

Gemäß einem weiteren Ausführungsbeispiel der optischen Anordnung sind der Flächenlichtmodulator und das Phasenelement und das optische System entlang einer durchgängigen optischen Achse angeordnet. Dies bietet den Vorteil, dass durch eine durchgängige optische Achse eine präzisere Abbildung erzielt werden kann und die optische Anordnung auch gleichzeitig für mehrere diskrete Wellenlängen als Grundaufbau dienen kann.

Gemäß einem weiteren Ausführungsbeispiel der optischen Anordnung ist das Phasenelement in einem Abstand von maximal 2mm von dem Flächenlichtmodulator vorgesehen. Das Phasenelement soll demnach an einem Ort vorgesehen sein, an dem ein Lichtbeitrag einem Bereich des Flächenlichtmodulators zugeordnet werden kann. Anders formuliert soll eine Zuordnung von Bereichen des Flächenlichtmodulators zu Bereichen des Phasenelements derart erfolgen, dass verschiedene Bereiche des Flächenlichtmodulators Bereichen des Phasenelements mit verschiedenen Phasenverschiebungen (Phasenbeeinflussungen) zugeordnet sind.

Gemäß einem weiteren Ausführungsbeispiel der optischen Anordnung ist das Phasenelement mit einer geringen Toleranz von ±5 mm in einer optisch konjugierten Ebene des Flächenlichtmodulators vorgesehen. Dies bietet den Vorteil, dass durch einen räumlich getrennten Aufbau des Phasenelements von dem Flächenlichtmodulator eine Kalibrierung und damit auch eine praktische Realisierung vereinfacht werden kann.

Gemäß einem weiteren Ausführungsbeispiel der optischen Anordnung weist das optische System eine Ausblend-Blende auf, die an dem Ort einer möglichen nullten Beugungsordnung die überlagerten Lichtbeiträge passieren lässt. Dies bietet den Vorteil, dass die Position der nullten Beugungsordnung in der Fokusebene nicht von der Wellenlänge bzw. der Lichtwellenlänge abhängt und somit eine Nutzung mehrerer Lichtwellenlängen oder einer Lichtquelle mit einem Grundaufbau möglich sein kann.

Gemäß einem weiteren Ausführungsbeispiel der optischen Anordnung lässt die Ausblend-Blende nur eine nullte Beugungsordnung der überlagerten Lichtbeiträge passieren oder lässt die Ausblend-Blende nur an dem Ort einer möglichen nullten Beugungsordnung die überlagerten Lichtbeiträge passieren. Dies bietet den Vorteil, dass die Qualität der Abbildung verbessert wird, im Gegensatz zu einer Abbildung, in der höhere Beugungsordnungen enthalten sind.

Gemäß einem weiteren Ausführungsbeispiel der optischen Anordnung liegt mindestens ein Bereich des Flächenlichtmodulators in einem Strahlengang, wobei dieser Strahlengang ausgelegt ist, um zu einer Überlagerung beizutragen. Weiterhin ist in diesem Strahlengang zwischen dem Flächenlichtmodulator und dem Bereich der Überlagerung das Phasenelement vorgesehen. Dabei ist das Phasenelement so ausgelegt, dass die Phase des Lichtbeitrags des genannten Strahlengangs in dem Bereich der Überlagerung eine bestimmte Phase aufweist. Dies bietet den Vorteil, dass eine Überlagerung in dem Bereich so gestaltet sein kann, dass verschiedene Strahlengänge eine feste Phasen-Zuordnung zueinander haben.

Gemäß einem weiteren Ausführungsbeispiel der optischen Anordnung sind mindestens zwei Bereiche des Flächenlichtmodulators ausgelegt, um mehrere unterschiedliche Strahlengänge zu modulieren, wobei die Strahlengänge jeweils ausgelegt sind, um zu einer Überlagerung beizutragen. Weiterhin ist das Phasenelement ausgelegt, um die Phase der Lichtbeiträge, die sich entlang der mehreren unterschiedlichen Strahlengänge ausbreiten, unterschiedlich stark zu verändern. Dies bietet den Vorteil, dass die unterschiedlichen Strahlengänge bei einer Überlagerung eine Summen-Lichtstärke ergeben, die eine Amplitude und eine Phase aufweist, die von der Modulation durch den Flächenlichtmodulator und von der Modulation durch das Phasenelement eingestellt werden kann.

Gemäß einem weiteren Ausführungsbeispiel der optischen Anordnung isind mindestens zwei Bereiche des Flächenlichtmodulators ausgelegt, um zwei unterschiedliche Strahlengänge zu modulieren, wobei die Strahlengänge jeweils ausgelegt sind, um zu einer Überlagerung beizutragen. Weiterhin ist das Phasenelement ausgelegt, um eine Differenz der Phasenänderung der Lichtbeiträge, die sich entlang der zwei unterschiedlichen, ausgezeichneten Strahlengänge ausbreiten, zum Beispiel von 90°±10° einzustellen. Dies bietet den Vorteil, dass eine Verringerung der Zahl von benötigten Zellen des Flächenlichtmodulators ermöglicht werden kann. Dabei kann eine Verringerung z.B. im Fall von analogen Kippspiegel-Flächenlichtmodulatoren um 50% erzielt werden.

Gemäß einem weiteren Ausführungsbeispiel der optischen Anordnung ist ein Bereich des Flächenlichtmodulators mehreren Bereichen des Phasenelements zugeordnet. Dies bietet den Vorteil, dass eine Erhöhung der Auflösung ebenfalls möglich ist. Dabei wird die Modulation durch einen Bereich des Flächenlichtmodulators mehreren phasenändernden Bereichen des Phasenelements zugeordnet.

Gemäß einem weiteren Ausführungsbeispiel der optischen Anordnung bilden vier Bereiche des Phasenelements mit unterschiedlicher Phasenbeeinflussung mit zwei Bereichen des Flächenlichtmodulators, die ausgelegt sind, um zumindest je zwei ausgezeichnete Strahlengänge zu modulieren, die komplexe Modulationszelle. Dies bietet den Vorteil, dass innerhalb einer komplexen Modulationszelle mithilfe von zwei Bereichen des Flächenlichtmodulators und durch vier Bereiche des Phasenelements eine Amplitude und eine Phase eingestellt werden können. Dadurch ist es möglich, mit einer geringen Anzahl an unterschiedlichen Bereichen des Flächenlichtmodulators eine Platzierung des Summen-Lichts in der komplexen Ebene zu erzielen.

Gemäß einem weiteren Ausführungsbeispiel der optischen Anordnung weisen mehrere Bereiche des Phasenelements, die mit mehreren Bereichen des Flächenlichtmodulators eine komplexe Modulationszelle bilden, mindestens drei Bereiche mit unterschiedlicher Phasenbeeinflussung auf. Dabei ist eine Differenz zwischen einem Winkel einer ersten Beeinflussung eines ersten Bereichs von mehreren Bereichen des Phasenelements und einem Winkel einer zweiten Beeinflussung eines zweiten Bereichs von mehreren Bereichen des Phasenelements, beispielsweise kleiner als 180°. Weiterhin ist das optische System ausgelegt, um eine Überlagerung der zu der komplexen Modulationszelle gehörenden Strahlengänge zu ermöglichen. Dies bietet den Vorteil, dass mit dieser Anordnung eine möglichst geringe Anzahl an Bereichen des Flächenlichtmodulators und des Phasenelements eine komplexe Modulationszelle bilden können. Hierbei sei angemerkt, dass zwischen dem Winkel der ersten Phasenbeeinflussung des ersten Bereichs und dem Winkel der zweiten Phasenbeeinflussung des zweiten Bereichs kein Winkel einer dritten Phasenbeeinflussung liegt.

Gemäß einem weiteren Ausführungsbeispiel der optischen Anordnung weisen mehrere Bereiche des Phasenelements, die mit mehreren Bereichen des Flächenlichtmodulators eine komplexe Modulationszelle bilden, genau n Bereiche mit unterschiedlicher Phasenbeeinflussung auf. Weiterhin ist eine Differenz zwischen einem Winkel einer ersten Phasenbeeinflussung und einem Winkel einer zweiten Phasenbeeinflussung mit einer Toleranz von ±360°/(2n) gleich 360°/n. Dies bietet den Vorteil, dass eine möglichst geringe Anzahl an Bereichen des Phasenelements eine möglichst hohen Genauigkeit der Phase erzielt werden kann.

In einem weiteren Ausführungsbeispiel der optischen Anordnung ist das Phasenelement mechanisch wechselbar vorgesehen. Dies bietet den Vorteil, dass ein Phasenelement bzw. mehrere Phasenelemente für unterschiedliche Lichtwellenlängen angepasst sein können, die je nach benötigter Lichtwellenlänge verwendet werden können.

In einem weiteren Ausführungsbeispiel der optischen Anordnung bilden der Flächenlichtmodulator und das Phasenelement eine Vielzahl von komplexen Modulationszellen. Dabei ist das optische System ausgelegt, um die Vielzahl von komplexen Modulationszellen getrennt abzubilden. Dies bietet den Vorteil, dass eine Vielzahl von z. B. Bildpunkten, die beispielsweise jeweils der Abbildung einer komplexen ivioduiationszeiie entsprechen, abgebildet werden können.

Bei einem weiteren Ausführungsbeispiel weist die optische Anordnung einen Kippspiegel auf, wobei das Phasenelement derart angeordnet ist, dass zwei Bereiche des Kippspiegels, die sich aufgrund einer mechanischen Verkoppelung bei einer Auslenkung des Kippspiegels im Hinblick auf eine optische Achse in entgegengesetzte Richtungen bewegen, zwei Bereichen des Phasenelements, die unterschiedliche Phasenbeiträge liefern, zugeordnet sind.

Bei einem weiteren Ausführungsbeispiel ist der Kippspiegel ausgelegt, um einen in einer Richtung senkrecht zu der optischen Achse variablen Phasenbeitrag zu erzeugen, wobei das Phasenelement ausgelegt ist, um in einem ersten Bereich des Kippspiegels einen ersten Phasenbeitrag zu liefern, und um in einem zweiten Bereich des Kippspiegels einen zweiten Phasenbeitrag zu liefern. Der Phasenbeitrag des Kippspiegels ist über den ersten und den zweiten Bereich hinweg örtlich stetig oder örtlich linear veränderlich ist.

Bei einem weiteren Ausführungsbeispiel ist das Phasenelement ausgelegt ist, um unter Verwendung eines Kippspiegels, der einen örtlich stetigen, von einer Auslenkung des Kippspiegels anhängigen Phasenbeitrag liefert, einen nicht-stetigen Phasenverlauf zu erhalten.

Bei einem weiteren Ausführungsbeispiel ist das Phasenelement derart angeordnet, dass zwei Bereichen eines Kippspiegels, die einen örtlich stetigen, von einer Auslenkung des Kippspiegels anhängigen Phasenbeitrag liefern, durch das Phasenelement ein Phasensprung von zumindest 90 Grad zugeordnet wird.

Ein weiteres Ausführungsbeispiel schafft ein Verfahren zum Betrieb einer optischen Anordnung mit einem Flächenlichtmodulator und einem Phasenelement zur Erzeugung eines komplexwertigen Lichtfeldes, wobei das Verfahren ein Anpassen einer optischen Eigenschaft in mehreren Bereichen eines Phasenelements aufweist, in Abhängigkeit von einer Nutz-Lichtwellenlänge von zu modulierenden Lichtbeiträgen, um zu erreichen, dass eine Phasenbeeinflussung in einem jeweiligen Bereich des Phasenelements über einen Bereich von Nutz-Lichtwellenlängen um höchstens 180° variiert. Dies bietet den Vorteil, dass Licht unterschiedlicher Lichtweiieniängen in Betrag und Phase eingestellt werden kann.

Ein weiteres Ausführungsbeispiel schafft ein Verfahren zum Betrieb einer optischen Anordnung mit einem Flächenlichtmodulator und einem Phasenelement zur Modulierung von unterschiedlichen Lichtwellenlängen. Das Verfahren weist dabei ein Einstellen mehrerer Phasenbeeinflussungen in mehreren Bereichen eines Phasenelements auf, die zu einer komplexen Modulationszelle gehören, in Abhängigkeit einer zu modulierenden Lichtwellenlänge der Lichtbeiträge, die von der einen komplexen Modulationszelle moduliert werden, und um eine Phasenbeeinflussung, die in jeweiligen Bereichen des Phasenelements erzielt werden, mit einer Toleranz von höchstens 180° über einen vorgegebenen Bereich von Nutz-Lichtwellenlängen konstant zu halten. Dies bietet den Vorteil, dass Licht unterschiedlicher Lichtwellenlängen in Betrag und Phase eingestellt werden kann.

Ein weiteres Ausführungsbeispiel schafft ein Verfahren zum Betrieb einer optischen Anordnung mit einem Flächenlichtmodulator, einem Phasenelement und einem optischen System, zur Erzeugung von Lichtfeldverteilungen, die räumlich mit variierender Amplitude und Phase einstellbar sind mit einem Einstellen eines Flächenlichtmodulators, um Lichtintensitäten in zumindest zwei Strahlengängen, die durch Bereiche des Flächenlichtmodulators, die überlagert abgebildet werden, verlaufen, und in dem unterschiedlich starke Phasenmodulationen erfolgen, zu modulieren. Wobei in einem ersten Einstellungszustand eine erste Verteilung der Lichtintensitäten in den zumindest zwei Strahlengängen vorliegt und dadurch Licht einer ersten Phasenlage erzielt wird und wobei in einem zweiten Einstellungszustand eine zweite Verteilung der Lichtintensitäten in dem zumindest zwei Strahlengängen vorliegt, die sich von der ersten Verteilung der Lichtintensitäten unterscheidet, und dadurch Licht in einer zweiten Phasenlage erzielt wird.

### Figurenkurzbeschreibung

Ausführungsbeispiele der vorliegenden Erfindung werden nachfolgend Bezug nehmend auf die beiliegenden Figuren näher erläutert. Es zeigen:
- Fig. 1: eine schematische Darstellung einer optischen Anordnung gemäß einem ersten Ausführungsbeispiel der vorliegenden Erfindung;
- Fig. 2: eine schematische Darstellung einer optischen Anordnung und eine Darstellung einer komplexen Ebene mit einem Summen-Licht-Vektor gemäß einem Ausführungsbeispiel;
- Fig. 3a: eine schematische Darstellung einer optischen Anordnung mit einer analogen Kippspiegelanordnung und einem Diffraktiven-Optischen-Element und einer Darstellung einer komplexen Ebene gemäß einem Ausführungsbeispiel der vorliegenden Erfindung;
- Fig. 3b: eine Darstellung von Phasenbeiträgen entlang des Lichtwegs in der optischen Anordnung gemäß Fig. 3a;
- Fig. 3c: eine Darstellung eines Phasenelements gemäß einem weiterem Ausführungsbeispiel in Schnittbild und Draufsicht;
- Fig. 4: eine schematische Darstellung einer optischen Anordnung mit einem DiffraktivenOptischen-Element in einer konjugierten optischen Ebene gemäß einem Ausführungsbeispiel der vorliegenden Erfindung;
- Fig. 5: ein Flussdiagramm eines Verfahrens gemäß einem Ausführungsbeispiel der vorliegenden Erfindung;
- Fig. 6: ein Flussdiagramm eines Verfahrens gemäß einem Ausführungsbeispiel der vorliegenden Erfindung;
- Fig. 7: ein Flussdiagramm eines Verfahrens gemäß einem Ausführungsbeispiel der vorliegenden Erfindung; und
- Fig. 8: eine schematische Darstellung eines Stands der Technik.

### Detaillierte Beschreibung der Ausführungsbeispiele

Nachfolgend werden verschiedene mögliche Ausführungsbeispiele gemäß der vorliegenden Erfindung aufgeführt, welche beispielsweise die Erfindung einer Phasen- und Amplituden-Flächenlichtmodulator-Anordnung realisieren können.

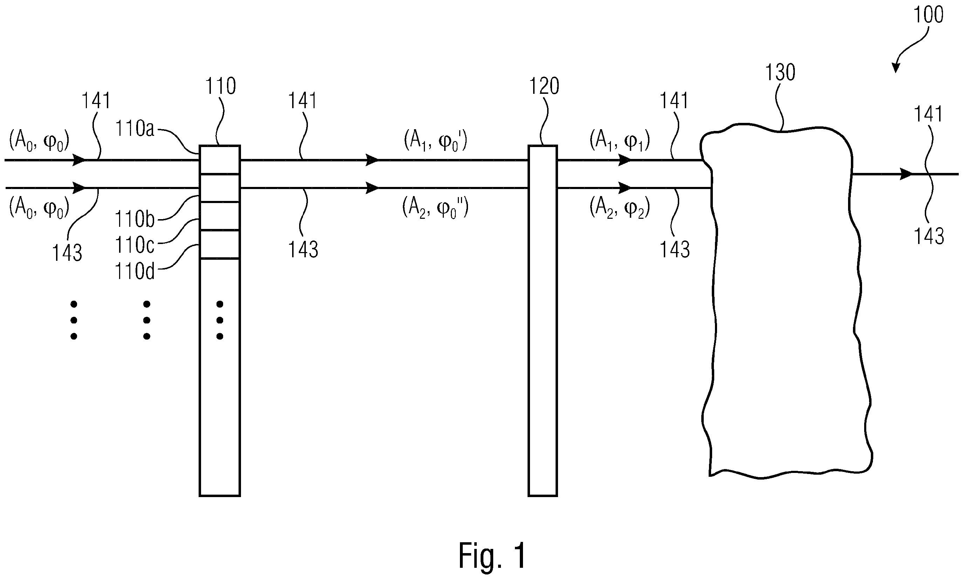

### Ausführungsbeispiel gemäß Fig. 1

Fig. 1 zeigt eine optische Anordnung 100. Die optische Anordnung 100 umfasst einen Flächenlichtmodulator 110, ein Phasenelement (Phasenmodulator) 120 und ein optisches System 130. Weiterhin zeigt Fig. 1 einen ersten Strahlengang 141 und zweiten Strahlengang 143. Entlang dieser unterschiedlichen Strahlengänge breitet sich, bei Annahme von Licht mit ausreichender Kohärenzlänge, jeweils Lichtbeiträge mit einer Amplitude und einer Phase aus. Weiterhin weist der -Flächenlichtmodulator 110 (bei dem es sich um einen Phasen-Flächenlichtmodulator oder um einen Flächen-Lichtmodulator mit gekoppelter Amplituden- und Phasenkennlinie handelt) mehrere Bereiche 110a, 110b, 110c... auf. In Fig. 1 sind die beiden Bereiche 110a, 110b derart dargestellt, dass die beiden Bereiche 110a, 110b eine Amplitude der Lichtbeiträge des jeweiligen Strahlengangs 141, 143 beeinflussen können. Der Flächenlichtmodulator 110 kann bzw. die Bereiche 110a, 110b, 110c können damit ausgelegt sein, um eine jeweilige Amplitude einer Mehrzahl von Lichtbeiträgen, die sich entlang einer Mehrzahl von Strahlengängen 141, 143 ausbreiten, einzustellen. Das Phasenelement 120 kann ausgelegt sein, um jeweilige Phasen der Mehrzahl von Lichtbeiträgen zu beeinflussen, sodass die Phasen von zumindest zwei Lichtbeiträgen, die sich entlang unterschiedlicher Strahlengänge 141, 143 ausbreiten, unterschiedlich stark verändert werden. Damit können die Lichtbeiträge gemäß ihrer Phase in einem jeweiligen Strahlengang in der komplexen Ebene ausgerichtet werden. Weiterhin kann das optische System 130 ausgelegt sein, um mehrere Bereiche 110a, 110b, 110c... des Flächenlichtmodulators 110 überlagert abzubilden. Die beispielsweise überlagerten Bereiche 110a, 110b des Flächenlichtmodulators 110 liegen dabei in verschiedenen Strahlengängen 141, 143, wobei die Lichtbeiträge, die sich entlang dieser verschiedenen Strahlengänge 141, 143 ausbreiten, durch das Phasenelement 120 unterschiedlich stark veränderte Phasen aufweisen. Dies kann auch so formuliert werden, dass die (optisch) überlagerten Bereiche des Flächenlichtmodulators 110 in verschiedenen Strahlengängen 141, 143 liegen, deren Phasen durch das Phasenelement 120 unterschiedlich stark verändert werden.

In Fig. 1 ist weiterhin angedeutet, dass durch die Überlagerung durch das optische System 130 die Strahlengänge 141, 143 so überlagert sind, sodass die Strahlengänge (bzw. die zugehörigen Bildpunkte des Flächenlichtmodulators) nicht mehr voneinander unterscheidbar dargestellt bzw. abgebildet sind. Weiterhin ist durch eine beispielhafte Angabe von Amplituden und Phasen der betreffenden Strahlengänge eine mögliche Wirkweise der optischen Anordnung 100 dargestellt. Die Amplitude und die Phase der beiden Strahlengänge 141, 143 vor der Beeinflussung durch den Phasen- bzw. Phasen/Amplituden-Flächenlichtmodulator 110 ist mit jeweils A₀ für die Amplitude und ϕ₀ für die Phase angegeben. In diesem Beispiel ist der Fall gewählt, dass das zu modulierende Licht eine identische Phase und eine identische Amplitude in den beiden Strahlengänge 141, 143 aufweist. Durch die Beeinflussung durch den Phasen- bzw. Phasen/Amplituden-Flächenlichtmodulator 110 beziehungsweise durch die Beeinflussung durch die Bereiche 110a, 110b ändert sich die jeweilige Amplitude der Lichtbeiträge der beiden Strahlengänge 141, 143. Der Strahlengang 141 weist nach der Beeinflussung durch den Bereich 110a eine Amplitude A₁ und Phase ϕ₀ auf. Damit soll gekennzeichnet sein, dass die Amplitude A₁ des Strahlengangs 141 nach der Beeinflussung durch den Bereich 110a sich im Allgemeinen von der Amplitude A₀ des Strahlengangs 141 vor der Beeinflussung durch den Bereich 110a unterscheiden kann. Entsprechendes kann auch für den Strahlengang 143 gesagt werden. Für den Lichtbeitrag, der sich entlang des Strahlengangs 143 ausbreitet, ist die Amplitude vor einer Beeinflussung durch den Bereich 110b mit A₀ angegeben, nach der Beeinflussung durch den Bereich 110b mit A₂. Durch die unterschiedliche Benennung der Amplituden ist nicht gesagt, dass sich A₁ von A₀ bzw. A₂ von A₀ unterscheiden müssen, der Flächenlichtmodulator 110 stellt diese Möglichkeit gleichwohl bevorzugt zur Verfügung. Weiterhin ergibt sich in dem Strahlengang 143 eine Phase ϕ₀" , wobei die Phase ϕ₀' im Vergleich zu der Phase ϕ₀ durch den Phasen-Flächenlichtmodulator bzw. den kombinierten Amplituden-Phasen-Flächenlichtmodulator eingestellt werden kann (so dass eine variabler Phasenversatz zwischen ϕ₀' und ϕ₀" erreicht wird).

Durch das Phasenelement 120 wird eine (weitere) Einstellung (Änderung, Beeinflussung) der Phasen der beiden Strahlengänge erzielt. Vor einer Beeinflussung durch das Phasenelement 120 weist der Lichtbeitrag oder weisen die Lichtbeiträge, die sich entlang des Strahlengangs 141 ausbreiten, eine Phase ϕ₀ (oder eine andere feste Phasenrelation zueinander) auf, nach der Beeinflussung durch das Phasenelement 120 weisen die Lichtbeiträge, die sich entlang des Strahlengangs 141 ausbreiten, eine Phase ϕ₁ auf. Bei dem zweiten Strahlengang 143 beträgt eine Phase vor einer der Beeinflussung durch das Phasenelement 120 ϕ₀. Nach einer Beeinflussung durch das Phasenelement 120 beträgt die Phase der Lichtbeiträge, die sich entlang des Strahlengangs 143 ausbreiten, ϕ₂. In diesem Fall ist eine unterschiedliche Phase ϕ₁, ϕ₂ eine sinnvolle Ausgestaltung. Damit ist es möglich, die Vektoren mithilfe der unterschiedlichen Phasen in einer komplexen Ebene zu platzieren, wobei die Vektoren der Lichtbeiträge eine Amplitude A₁, A₂ und eine jeweilige Phase ϕ₁, ϕ₂ aufweisen.

Das optische System 130 kann weiterhin ausgelegt sein, um die Strahlengänge 141, 143 zu überlagern bzw. überlagert abzubilden (beispielsweise derart, dass die Strahlengänge 141, 143 in einem gemeinsamen Bildpunkt enden, bzw. dass verschiedene Sub-Bildpunkte des Flächenlichtmodulators auf einen gemeinsamen Bildpunkt abgebildet werden.). Dies ist in Fig. 1 zur Veranschaulichung derart dargestellt, dass die Strahlengänge 141, 143 nach dem Durchlaufen des optischen Systems 130 als ein Strahlengang dargestellt sind. Durch diese Überlagerung der Strahlengänge kann eine Überlagerung der Wellen unter Berücksichtigung der Amplituden und der Phasen erfolgen. Dies kann beispielsweise einer Vektoraddition der "Vektoren" der Lichtbeiträge, die sich entlang der beiden Strahlengänge 141, 143 ausbreiten, entsprechen.

Das optische System 130 kann dabei so ausgelegt sein, dass nicht nur zwei Strahlengänge, die in diesem Fall auf die Strahlengänge 141 und 143 festgelegt sind, sondern eine Mehrzahl von Strahlengängen überlagert abgebildet werden. Ebenfalls ist eine Überlagerung mehrerer Strahlengänge, die von benachbarten Bereichen den - Flächenlichtmodulators 110 beeinflusst werden, durch das optische System 130 möglich.

Das optische System 130 kann somit auch derart ausgelegt sein, dass das optische System 130 mehrere Bereiche oder mehrere benachbarte Bereiche des Flächenlichtmodulators 110 zu einer komplexen Modulationszelle überlagert bzw. überlagert abbildet. Mit einer komplexen Modulationszelle kann gemeint sein, dass durch das Phasenelement 120, das eine Phase unterschiedlich einstellt, und durch eine Amplitudenmodulation durch den Flächenlichtmodulator 110 eine Einstellung der Lichtbeiträge nach Betrag und Phase erfolgen kann. Durch eine Überlagerung der verschiedenen Lichtbeiträge unterschiedlicher Amplituden und unterschiedlicher Phasen kann somit ein Summen-Licht entstehen, das einen Vektor in der komplexen Ebene darstellt, wobei der Vektor des Summen-Lichts sich von den Vektoren, aus denen dieser zusammengesetzt ist, unterscheiden kann. Alternativ kann durch den Flächenlichtmodulator 110 eine gesteuerte Auswahl einer der Lichtbeiträge erfolgen, wobei in einer komplexen Modulationszelle zu verschiedenen Zeitpunkten verschiedene Lichtbeiträge bzw. verschiedene Strahlengänge 141, 143 ausgewählt werden können.

Das optische System 130 kann weiterhin ein optisches Tiefpassfilter aufweisen. Dieses .Tiefpassfilter kann ausgelegt sein, um mehrere Strahlengänge so zu überlagern, dass mehrere Bereiche oder mehrere benachbarte Bereiche des Flächenlichtmodulators 110 zu einer komplexen Modulationszelle überlagert werden. Auch in diesem Fall kann ein Summen-Licht, das sich aus den Lichtbeiträgen der unterschiedlichen Strahlengänge zusammensetzen kann, eine Amplitude und Phase aufweisen, die sich von den Amplituden und den Phasen der einzelnen Lichtbeiträge unterscheidet.

Als sinnvoller Strahlengang, der keine Streuung und Beugung und andere ungewollte ("parasitäre") Effekte berücksichtigt, d. h. eine Art funktioneller Strahlengang, kann angegeben werden, dass dieser Strahlengang zunächst über den Flächenlichtmodulator 110, gefolgt davon über das Phasenelement 120 und weiterhin über das optische System 130 läuft. Dieser Strahlengang ist in Fig. 1 sinngemäß dargestellt. Dahingegen ist es auch möglich, dass der Strahlengang zuerst das Phasenelement 120 und erst in Folge den Flächenlichtmodulator 110 durchläuft. Auch kann es sein, dass Elemente des optischen Systems 130 vor den beiden Modulatoren 110 und 120 oder zwischen den beiden Modulatoren 110, 120 durchlaufen wird. Eine Bedingung ist aber, dass die Überlagerung der zu einer komplexen Modulationszelle gehörenden Strahlengänge erst nach dem Durchlaufen des Flächenlichtmodulators 110 und des Phasenelements 120 erfolgt.

Das hier beschriebene Verfahren nutzt beispielsweise die nullte Beugungsordnung eines in den SLM (engl. "spatial light modulator"; hier: Flächenlichtmodulator 110) geschriebenen Musters. Die Position der nullten Beugungsordnung in der Fokusebene hängt nicht von der Wellenlänge ab. Das hier beschriebene Verfahren ist daher z.B. monochromatisch, auch sequentiell oder räumlich parallel bei mehreren Wellenlängen und ggf. bei spektral breitbandigen Quellen mit Filter nutzbar. Das vorgestellte Verfahren weist keine verfahrensinhärenten chromatischen Aberrationen auf, im Gegensatz zu [3].

Die optische Achse des Systems bleibt erhalten. Das vorgestellte Verfahren vereinfacht den optischen Systementwurf erheblich, indem es den bestimmungsgemäßen Einsatz korrigierter optischer Bauelemente (z. B. in Gestalt des optischen Systems 130 oder Teilen des optischen Systems 130) erlaubt und macht ihn zugleich für mehrere Zwecke (Wellenlängen) parallel nutzbar.

Im Vergleich zum bestehenden Verfahren nach [3] verbessert sich die Lichteffizienz bei Nutzung der von nullten Beugungsordnung. Ein größerer Prozentsatz des Lichts gelangt von der (beispielsweise Laser-)Lichtqueile zum Systemausgang.

Das Verfahren zur komplexen Modulation ist beispielsweise mit Phasen-Flächenlichtmodulatoren und Phasen-Amplituden-Flächenlichtmodulatoren - wie zum Beispiel Digitalen Mikrospiegelanordnungen oder analogen Kippspiegelmatrizen - einsetzbar.

Zusammenfassend ist somit zu sagen, dass die Figur 1 einen optische Anordnung (100) zur Erzeugung von Lichtfeldverteilungen, die (zum Beispiel räumlich und/oder zeitlich) mit variierender Amplitude und Phase einstellbar sind, zeigt. Die optische Anordnung umfasst den programmierbaren Flächenlichtmodulator (110), das Phasenelement (120) und ein optisches System (130). Das Phasenelement ist ausgelegt, um mindestens zwei oder mehr Phasenbeiträge auf benachbarten Modulatorpixeln (zum Beispiel auf "Subpixeln" oder "Sub-Bildpunkten, die durch benachbarte Bereiche des Flächenlichtmodulators gesteuert werden, bzw. die benachbarten Bereichen des Flächenlichtmodulators zugeordnet sind) zu bewirken. Das optische System (130) ist ausgelegt ist, um mehrere Bereiche (110a; 110b; 110c) des Flächenlichtmodulators (110; 210; 310; 410), zum Beispiel Bereiche des Flächenlichtmodulators, die unterschiedliche Phasenbeiträge durch das Phasenelement erfahren, überlagert abzubilden. Der Flächenlichtmodulator und das Phasenelement sind innerhalb einer Schärfentiefe einer Ebene, oder konjugierter optischer Maskenebenen, angeordnet. Die optische Anordnung ist also zum Beispiel ausgelegt, um in einer folgenden Bildebene (zum Beispiel einer auf das optische System folgenden Bildebene) eine vorgebbare komplexe Lichtfeldverteilung zu erreichen.

Das Phasenelement kann im Übrigen durch ein Polarisationselement ersetzt werden. Das Polarisationselement kann ausgelegt sein, um mindestens zwei oder mehr Polarisationsbeiträge auf benachbarten Modulatorpixeln zu bewirken oder mindestens zwei verschiedene Polarisationsfilter auf benachbarte Modulatorpixel anzuwenden. Somit ist eine Polarisation eines durch Überlagerung von Lichtbeiträgen erzielbaren Lichts einstellbar.

Die Verwendung eines Polarisationselements ist im Übrigen mit der Verwendung eines Phasenelements kombinierbar, so dass beispielsweise Amplitude, Phase und Polarisation einstellbar sind. Indem beispielsweise verschiedene Polarisationselemente mit festem oder langsam veränderlichem Polarisationsverhalten einem Bildpunkt zugeordnet werden, ist eine schnelle Steuerung der Polarisationseigenschaften durch den Flächenlichtmodulator möglich (beispielsweise indem verschiedene Subpixel bzw. Subbildpunkte des Flächeniichtmodulators, die überlagert auf einen Bildpunkt abgebildet werden, bestimmen, wieviel Lichtintensität auf welches der einzelnen Polarisationselemente fällt bzw. wie groß bzw. wie intensiv Lichtbeiträge von den einzelnen Polarisationselementen sind).

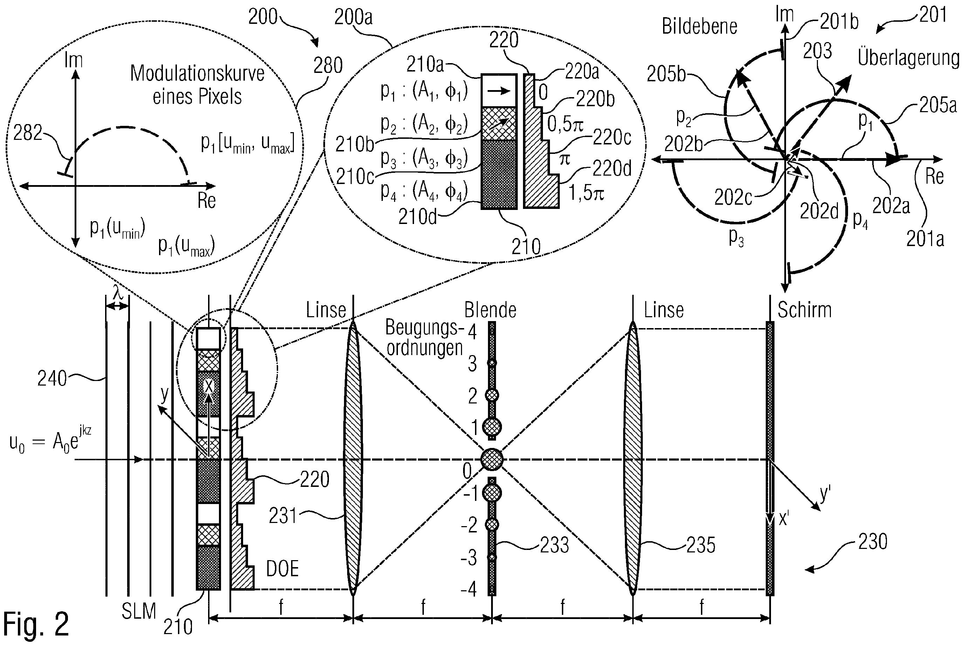

### Ausführungsbeispiel gemäß Fig. 2

Fig. 2 zeigt ein Ausführungsbeispiel einer optischen Anordnung 200. Weiterhin zeigt Fig. 2 einen Detailausschnitt 200a des Flächenlichtmodulators 210 und des Phasenelements 220. Weiterhin zeigt Fig. 2 eine Darstellung 201 einer komplexen Ebene mit verschiedenen Vektoren. Diese unterschiedlichen Vektoren 202a, 202b stellen Vektoren, die Amplitude und Phase von Lichtwellen repräsentieren, mit möglichen Amplituden und Phasen dar, die mithilfe des Phasenelements 220 eingestellt werden können. Ein weiterer Vektor 203 zeigt einen möglichen Summen-Vektor 203, der in Betrag und Phase einem möglichen Summen-Licht entspricht (bzw. der eine Welle des Summen-Lichts repräsentiert), wobei ein das Summen-Licht darstellender Vektor aus Vektoren 202a, 202b (bzw. einzelnen der Vektoren) zusammengesetzt ist bzw. durch Vektoraddition der Vektoren 202a, 202b gebildet wird. Das Summen-Licht entsteht durch Überlagerung unterschiedlicher Licht-Beiträge, die von verschiedenen Bereichen 210a, 210b, 210c, 210d des Flächenlichtmodulators 210 beeinflusst (moduliert) werden.

Die optische Anordnung 200 weist hierbei den bereits erwähnten Flächenlichtmodulator 210 auf. Der Flächenlichtmodulator 210 kann beispielsweise so angesteuert werden, dass von diesem reflektierte, remittierte, transmittierte oder emittierte Lichtbeiträge zumindest bei einer konstanten Lichtwellenlänge eine durch die Ansteuerung variierbare Phasenbeziehung zueinander aufweisen, wobei die Ansteuerung des Flächenlichtmodulators sowohl einen Amplitudenbeitrag des jeweiligen Bereichs als auch einen Phasenbeitrag des jeweiligen Bereichs verändern können. Die Veränderung von Amplitudenbeitrag und Phasenbeitrag kann beispielsweise verkoppelt sein, wie beispielsweise bei Bezugszeichen 280 gezeigt ist.

Insbesondere ist bei Bezugszeichen 280 eine Ortskurve gezeigt, die angibt, wie sich Amplitudenbeitrag und Phasenbeitrag eines Bereichs des Flächenlichtmodulators mit einer Variation einer Ansteuerspannung (oder eines andersartigen Ansteuersignals) ändern können. Beispielsweise können ein Amplituden-und Phasenbeitrag eines Bereichs des Flächenlichtmodulators (gemeinsam dargestellt durch einen Punkt in einer komplexen Ebene) eine Ortskurve durchlaufen 282 durchlaufen, die an einem Punkt p1(umin) beginnt und an einem Punkt p1(umax) endet. Entlang der Ortskurve variieren beispielsweise sowohl Amplitude als auch Phase, wobei eine Phasenveränderung entlang der Ortskurve beispielsweise kleiner als 180 Grad ist, und wobei Amplitude und Phase nur gemeinsam einstellbar sind. Dies kann beispielsweise bei einem Flüssigkristall-Flächenlichtmodulator der Fall sein.

Diese Anregung bzw. Bestrahlung bzw. Ansteuerung ist in Fig. 2 durch die ebene Wellenfront 240 dargestellt. Diese ebene Wellenfront 240 zeigt eine Wellenlänge λ und eine Ausbreitungsrichtung in z-Richtung. Hierbei wird die ebene Wellenfront 240 in komplexer (Zeiger-)Form als A₀e^{jkz} beschrieben. Diese ebene Wellenfront 240 kann auch eine mögliche Anregung bzw. Bestrahlung bzw. Ansteuerung des Flächenlichtmodulators 210 (SLMs) darstellen (beispielsweise bei einer Emission). Benachbart zu diesem Flächenlichtmodulator 210 ist in geringem Abstand das Phasenelement 220 angebracht. Dieses Phasenelement 220 ist in dem gewählten Fall als DOE (Diffraktives-Optisches-Element) gekennzeichnet. In dem Detailausschnitt 200a sind nochmals Teile des Flächenlichtmodulators 210 und des Phasenelements 220 dargestellt. Dabei weist der Flächenlichtmodulator 210 unterschiedliche Bereiche 210a, 210b, 210c und 210d auf. Diese unterschiedlichen Bereiche können auch als Bildpunkte bzw. Pixel bzw. Sub-Bildpunkte bzw. SubPixel durchnummeriert (p₁, p₂, p₃, p₄) werden. Beispielsweise können die Bereiche 210a-210d auch aus "Subpixel" angesehen werden und alle zusammen auf einen einzigen Bildpunkt eines Bildes überlagert abgebildet werden. Diesen Bereichen 210a bis 210d sind unterschiedliche Bereiche des Phasenelements 220 zugeordnet. Das Phasenelement 220 weist somit korrespondierende (zugeordnete) Bereiche zu den vier Bereichen 210a, 210b, 210c und 210d des Flächenlichtmodulators 210 auf. Bei dem Phasenelement 220 ist eine Änderung der Phase angedeutet, wobei der zu dem Bereich 210a korrespondierende bzw. der dem Bereich 210a zugeordnete Bereich 220a des Phasenelements 220 eine erste Phasenänderung von beispielsweise 0 aufweist (wobei eine Festlegung des Phasenbeitrags des ersten Bereichs beliebig festgelegt werden kann, und wobei es lediglich auf die Unterschiede der Phasenbeiträge der Bereiche 220a, 220b, 220c, 220d ankommt). Der dem Bereich 210b zugeordnete Bereich 220b des Phasenelements 220 weist eine zweite Phasenänderung von z. B. 0,5π, der dem Bereich 210c zugeordnete Bereich 220c des Phasenelements 220 weist eine dritte Phasenänderung von z. B. π und der dem Bereich 210d zugeordnete Bereich 220d des Phasenelements 220 weist eine vierte Phasenänderung von z. B. 1,5π auf.

Weiterhin weist die optische Anordnung 200 ein optisches System 230 auf. in dem dargestellten Fall weist das optische System 230 eine erste Linse 231, eine Blende 233 und eine zweite Linse 235 auf. Die Blende 233 kann in diesem Fall eine Ausblend-Blende darstellen, die ausgelegt ist, um eine nullte Beugungsordnung der überlagerten Lichtbeiträge passieren zu lassen oder eine Ausblend-Blende, die nur eine nullte Beugungsordnung der überlagerten Lichtbeiträge passieren lässt. Weiterhin kann die Blende 233 auch einer Tiefpass-Blende entsprechen, wobei die Blende 233 in diesem Fall ausgelegt ist, um mehrere Bereiche oder mehrere benachbarte Bereiche, beispielsweise die Bereiche 210a, 210b, 210c, 210d des Flächenlichtmodulators 210 zu einer komplexen Modulationszelle zu überlagern.

Weiterhin weist Fig. 2 einen Schirm auf, der nicht Teil der optischen Anordnung 200 ist. Auf diesen Schirm kann beispielsweise das komplexwertige (d. h. das nach Betrag und Phase eingestellte) Flächenlicht projiziert werden.

Weiterhin zeigt Fig. 2 eine Darstellung 201, die eine Lage von Vektoren verschiedener Lichtbeiträge, die sich in einer Bildebene ergeben, in einer komplexen Ebene darstellt. Die Darstellung 201 weist dabei eine Abszisse 201a auf, die einer Realteilachse entspricht, und weist weiterhin eine Ordinate 201b auf, die einer Imaginärteilachse entspricht. Weiterhin weist die Darstellung die zwei Vektoren, die den zwei Pixeln p₁ und p₂, entsprechen, auf. Ein Pixel p₁ bzw. der Lichtbeitrag eines Pixels p₁ wird durch einen Vektor 202a dargestellt. Dieser Vektor 202a liegt in dem gewählten Beispiel in der Realteilachse, kann jedoch bei entsprechender Ansteuerung des ersten Bildpunkts bzw. Sub-Bildpunkts 210a (das heißt durch Veränderung eines Ansteuersignals) entlang einer Ortskurve 205a variiert werden. Der Vektor 202b entspricht einem Lichtbeitrag des Pixels p₂. Der Vektor 202b kann durch Veränderung einer Ansteuerspannung des zweiten Sub-Bildpunkts entlang einer Ortskurve 205b variiert werden. Es ist hier ersichtlich, die Ortskurve 205b gegenüber der Ortskurve 205a um 90 Grad gedreht ist. Dies wird - unter der Annahme gleichartiger Flächenlichtmodulator-Sub-Bildpunkte - durch den Phasenunterschied zwischen dem ersten Bereich 220a des Phasenelements und dem zweiten Bereich 220b des Phasenelements erreicht. Entsprechend kann in der vergrößerten Darstellung der optischen Anordnung 200a erkannt werden, dass dem Pixel p₂ bzw. dem Bereich 210b ein Phasenversatz in dem Phasenelement 220 von 0,5π zugeordnet ist. Der Vektor 202c, der einem Lichtbeitrag des Pixels p₃ entspricht, ist vergleichsweise kurz. Die Ortskurve 205c des dritten Sub-Bildpunkts ist um 180 Grad gedreht (im Vergleich zu der Ortskurve des ersten Sub-Bildpunkts), was durch den Phasenversatz von π in dem Bereich 220c des Phasenelements bedingt ist, der dem Pixel p₃ bzw. dem Bereich 210c des Flächenlichtmodulators zugeordnet ist. In der Darstellung 201 ist ein vierter Vektor 202d dargestellt, der einem Beitrag des Pixels p₄ entspricht. Die Ortskurve des vierten Sub-Bildpunkts ist gegenüber der Ortskurve des ersten Sub-Bildpunkts um 270 Grad gedreht, was durch den Phasenversatz von 3π/2 in dem Bereich 220d des Phasenelements bedingt ist, wobei dieser Phasenversatz von 1,5π dem Bereich 210d bzw. dem Pixel p₄ des Flächenlichtmodulators 210 zugeordnet ist.

In der vergrößerten Darstellung 200a der optischen Anordnung 200 kann gesehen werden, dass der Bereich 210a, der einem Pixel p₁ entspricht, weiß gehalten ist, was einer ersten Ansteuerspannung entspricht. Der Bereich 210b, der einem Pixel p₂ entspricht, ist in einem mittleren grau (bzw. einer entsprechenden Schraffur) gehalten, was einer zweiten Ansteuerspannung . Die weiteren Pixel p₃, d. h. der Bereich 210c, und der Pixel p₄, d. h. der Bereich 210d, sind jeweils schwarz gehalten, was einer dritten Ansteuerspannung entspricht.

Dies kann in dem gezeigten Beispiel als ein Wert einer Transmissivität und auch eines Phasenbeitrags des Flächenlichtmodulators 210 gesehen werden. D. h. dass die Bereiche 210c und 210d der Idee nach eine geringe Transmissivität aufweisen bzw. einfallendes Licht(zumindest nahezu) komplett absorbieren. Der Bereich 210a besitzt eine sehr hohe Transmissivität, die beispielsweise einer Transmissivität von 100% (oder nahe bei 100%) entsprechen kann. Die Transmissivität des Bereiches 210b ist in einem mittleren grau gezeigt und kann beispielsweise einer Transmissivität von 50% (oder in einem Bereich zwischen 50% und 80%) entsprechen. In der Darstellung 201 ist dies nochmals aufgegriffen. Der Vektor 203 kann als Vektoraddition eines Beitrages des Pixels p₁, mit voller Amplitude und einem Beitrag des Pixels p₂ mit der halben Amplitude erkannt werden. Kleinere Beiträge können aber auch von dem dritten Pixel (oder Sub-Bildpunkt) und von dem vierten Picxel (oder Sub-Bildpunkt) stammen.

In Fig. 2 ist weiterhin das Phasenelement 220 dargestellt, das in diesem Fall mit DOE beschriftet ist. Das Phasenelement 220 kann somit einem diffraktiven optischen Element entsprechen. Dieses Phasenelement 220 kann eine zeitunveränderliche Beeinflussung der Phase aufweisen, was alternativ so formuliert werden kann, dass das Phasenelement 220 statisch ist. In dem Ausführungsbeispiel nach Fig. 2 ist weiterhin dargestellt, dass dieses Phasenelement 220 eine Platte aufweist, wobei unterschiedliche Strahlengänge, die überlagert abgebildet werden sollen, beeinflusst durch die Platte des Phasenelements 220 eine unterschiedliche optische Weglänge durchlaufen. Durch diese unterschiedliche optische Weglänge kann eine Differenz der Phase der unterschiedlichen Strahlengänge erzielt werden. Dies ist beispielsweise in der Vergrößerung 200a so dargestellt, dass die (relativen) Phasenänderungen (bzw. Phasenbeiträge) mit 0, 0,5π, π und 1,5π entsprechend verschiedenen Dicken der Platte gezeigt sind. Somit kann das Phasenelement eine unterschiedliche optische Weglänge dadurch erzielen, dass die Strahlengänge verschiedene Dicken der Platte durchlaufen. Eine alternative Ausführungsform wäre beispielsweise eine Kombination von Bereichen mit unterschiedlichen Brechungsindizes. Dabei könnte die Platte beispielsweise eben hergestellt werden. Weiterhin ist eine Kombination der beiden Möglichkeiten, d. h. einer unterschiedlichen mechanischen Dicke und einem unterschiedlichen Brechungsindex der einzelnen Bereiche, denkbar. Dies alles erzielt eine unterschiedliche optische Weglänge von verschiedenen Strahlengängen, die unterschiedliche Bereiche des Phasenelements 220 durchlaufen.

In Fig. 2 bzw. in der Darstellung der optischen Anordnung 200 ist dargestellt, dass das Phasenelement 220 aus mehreren einzelnen Abschnitten zusammengesetzt ist. Diese Abschnitte können sich, wie in Fig. 2 dargestellt, wiederholen. In dem dargestellten Beispiel wiederholen sich jeweils vier unterschiedlichen Phasenversätze, selbstverständlich ist auch einer Wiederholung nach weniger als oder nach mehr als vier Bereichen unterschiedlicher Phasenversätze denkbar. In Fig. 2 ist weiterhin eine einfallende ebene Welle 240 gezeigt, die mit u₀=A₀e^{jkz} beschriftet ist. Diese ebene Welle 240 kann in dem dargestellten Beispiel durch die einzelnen Bereiche 210a, 210b, 210c, 210d des Flächenlichtmodulators 210 absorbiert bzw. zumindest nahezu vollständig absorbiert (schwarze Bereiche bzw. äquivalente Schraffur) oder transmittiert (weiße Bereiche) oder teils absorbiert bzw. teils transmittiert (graue Bereiche bzw. äquivalente Schraffur) werden.

Weiterhin ist zu sehen, dass die Abstände zwischen der abzubildenden Fläche, d. h. der Ebene des Flächenlichtmodulators 210 und einer ersten Linse 231 des optischen Systems 230 einer Brennweite f der Linse entspricht. In einem Abstand der Brennweite f ist von der Linse 231 eine Blende 233 gezeigt. Auf dieser Blende 233 sind weiterhin verschiedene Beugungsordnungen dargestellt. An diesen Beugungsordnungen ist zu sehen, dass die Blende 233 so ausgelegt ist, dass nur eine nullte Beugungsordnung passieren kann. In einem Abstand einer weiteren Brennweite f ist eine zweite Linse 235 dargestellt. Schlussendlich ist ein Schirm dargestellt, der sich in einem Abstand einer Brennweite f von der zweiten Linse 235 befindet. Dieses optische System ist sozusagen dahingehend ausgelegt, dass die Fläche 210 bzw. die Fläche des Flächenlichtmodulators 210 auf den Schirm abgebildet werden kann.

Als sinnvoller Strahlengang, der keine Streuung und Störlicht und andere ungewollte ("parasitäre") Effekte berücksichtigt, d. h. eine Art funktioneller Strahlengang kann angegeben werden, dass dieser Strahlengang zunächst über den Flächenlichtmodulator 210, gefolgt davon über das Phasenelement 220 und weiterhin über das optische System 230 läuft. Im Bereich des optischen Systems 230 durchläuft der Strahlengang zunächst die erste Linse 231, danach die Blende 233 und zuletzt die zweite Linse 235. Dies ist sinngemäß in Fig. 2 dargestellt. Dahingegen ist es möglich, dass der Strahlengang zuerst das Phasenelement 220 und erst in Folge den Flächenlichtmodulator 210 durchläuft. Auch kann es sein, dass Elemente des optischen Systems 230 vor den beiden Modulatoren 210 und 220 oder zwischen den beiden Modulatoren 210, 220 durchlaufen wird. Eine Bedingung ist aber, dass die Überlagerung (hier beispielsweise im Bereich der Blende 235) der zu einer komplexen Modulationszelle gehörenden Strahlengänge erst nach dem Durchlaufen des Flächenlichtmodulators 210 und des Phasenelements 220 erfolgt.

Fig. 2 zeigt somit ein komplexes Modulationsverfahren unter Nutzung der nullten Beugungsordnung. Ein statisches Phasenelement 220 (hier DOE) platziert die komplexwertigen Beiträge der SLM-Pixel (bspw. p₁, p₂, p₃, p₄) zum Bild in der Ausgangsebene (Schirm). Eine Blende 233 sorgt für die Überlagerung der Pixel. Ein komplexes Makropixel besteht damit hier beispielsweise aus den vier programmierbaren SLM-Pixeln p₁, p₂, p₃ und p4 (auch als "Subpixel" bzw. Sub-Bildpunkte bezeichnet).

Das vorgestellte Verfahren verwendet ein System aus einem programmierbaren Flächenlichtmodulator 210 und einem weiteren, statischen Phasenelement 220 (z.B. Diffraktives Optisches Element, DOE). Fig. 2 zeigt das Prinzip. Die Pixel (beziehungsweise Ortskurven der durch die Pixel bewirkten Amplituden- und Phasenbeiträge) in einer komplexen Modulationszelle werden mittels Phasenverzögerung, bewirkt zum Beinspiel durch das Phasenelement 220, in der komplexen Ebene platziert (beispielsweise so, dass die Ortskurven - über einem Einstellparameter - der Amplituden- und Phasenbeiträge relativ zueinander gedreht werden). Das erfindungsgemäße Verfahren nutzt damit in erster Linie die nullte Beugungsordnung des durch den SLM 210 modulierten Feldes. Alle höheren Beugungsordnungen werden vom optischen Pfad mittels einer Blende 233 ggf. ausgeschlossen. Die Blende 233 sorgt zudem bspw. für die Überlagerung benachbarter Pixel zu einer komplexen Modulationszelle (optische Tiefpassfilterung). Die Position der nullten Beugungsordnung ist nicht von der Wellenlänge abhängig. Bei dem vorgestellten Verfahren werden daher alle Komponenten in einer durchgängigen optischen Achse für eine präzise Abbildung angeordnet, die auch gleichzeitig für mehrere diskrete Wellenlängen als Grundaufbau dienen kann.

Das Verfahren eignet sich zur komplexwertigen Modulation von Licht. Es kann mit einer Vielzahl von Modulatortechnologien kombiniert werden, darunter auch Technologien mit schnellen Bildwiederholraten (z.B. Mikroelektromechanische Systeme, MEMS). Das Verfahren eignet sich besonders für Anwendungen, die komplexwertige Modulation in Verbindung mit hohen Bildwiederholraten fordern. Zusätzlich sind ein flexibel gestalteter und zugleich präziser Systemaufbau und die Nutzung von unterschiedlichen Wellenlängen Grundanliegen der Erfindung.

Mögliche Applikationen liegen in der technischen Behandlung von Streulicht: Digitale Optische Phasenkonjugation [6] und Wavefront Shaping (Wellenfront-Formung) [7]. Diese beiden vergleichsweise jungen Disziplinen erkunden Möglichkeiten der Bildgebung durch streuende Medien und innerhalb dieser Medien. Zahlreiche biologische Materialien weisen starke Streueffekte auf. Die beiden genannten Methoden ermöglichen Fokussierung und Bildgebung in tiefen Gewebeschichten, erfordern dafür jedoch schnelle und möglichst komplexe Lichtfeldmodulation [8].

Eine weitere mögliche Anwendung ist die holografische 3D-Bilddarstellungen mittels Digitaler Holografie. Zur exakten Rekonstruktion eines dreidimensionalen Lichtfelds ist komplexe Modulation nötig [9]. Derzeit wird in dieser Applikation Phasenmodulation eingesetzt und Qualitätseinbußen durch die fehlende Einstellbarkeit der Amplitude werden in Kauf genommen. Das vorgestellte Verfahren kann diese optische Abbildungsqualität verbessern.

Für höchste optische Flexibilität ist es weiterhin erfindungsgemäß vorteilhaft, das statische DOE 220 in dem vorgestellten Verfahren durch ein programmierbares Phasenelement (bspw. 120, 220, 320, 420) zu ersetzen, z.B. mit langsamer Modulation auf Flüssigkristallbasis. So können beispielsweise an die Wellenlänge angepasste Phasenmasken realisiert werden. Gleichzeitig wird in dieser Realisierung kein Kompromiss bei der Bildwiederholrate notwendig, da durch den primären amplitudenmodulierenden SLM 210 (MEMS), somit dem Flächenlichtmodulator 210, mit schneller Modulatortechnologie gearbeitet werden kann.

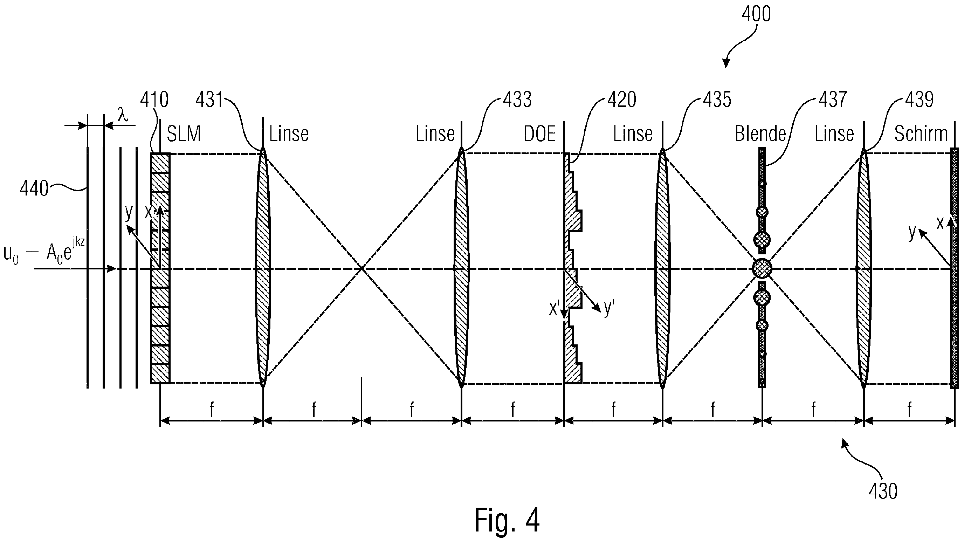

Weiterhin kann festgestellt werden, dass der statische Modulator 220 beispielsweise in geringem Abstand zum programmierbaren SLM angeordnet werden kann. Gleichbedeutend dazu kann der statische Modulator 220 auch in einer konjugierten optischen Ebene angebracht werden (d. h. das Phasenelement 420 siehe Fig. 4). Dies kann die Justierung und damit die praktische Realisierung vereinfachen.

Zusammenfassend ist zu sagen, dass Fig. 2 eine Kennlinie eines Flüssigkristallelements zeigt, wobei Amplitude und Phase verkoppelt eingestellt werden. Ein Kurvenparameter in einer vergrößerten Darstellung bei Bezugszeichen 280 ist die Spannung, die an das Element angelegt wird. In der Darstellung bei Bezugszeichen 200a repräsentiert ein Grauwert eine Amplitude und ein Pfeil eine Phasenlage der einzelnen Pixel.

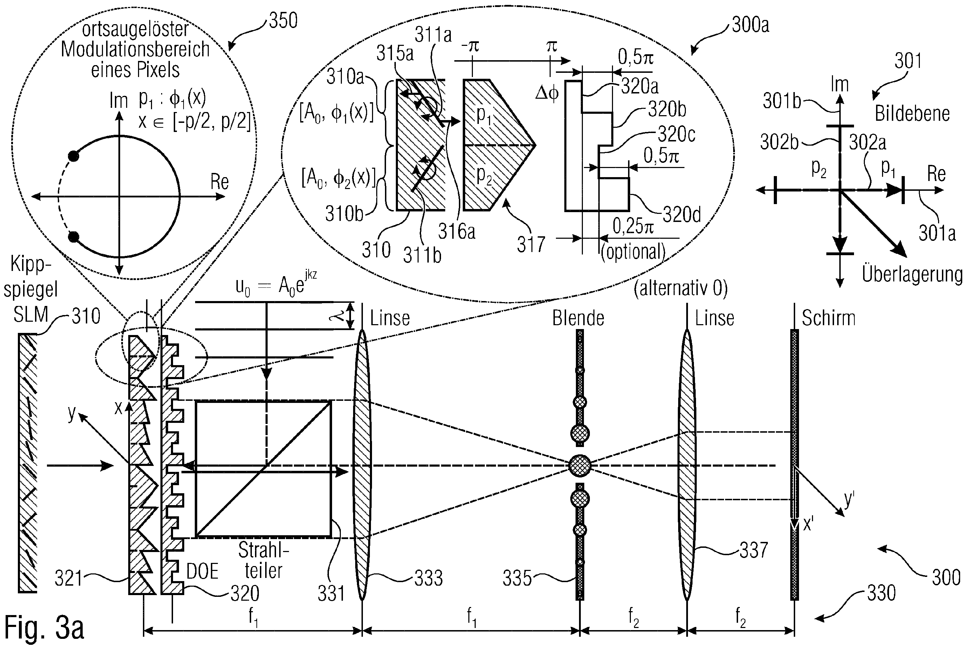

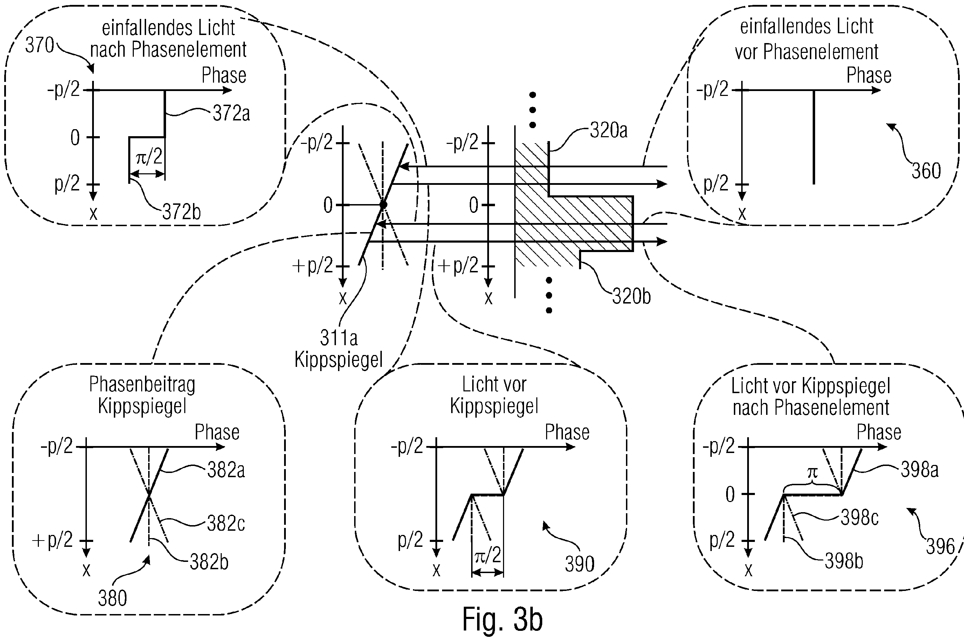

### Ausführungsbeispiel gemäß Fig. 3a und 3b

In Fig. 3a ist eine optische Anordnung 300 mit einer Kippspiegelanordnung 310 dargestellt. Weiterhin ist eine Darstellung 301 von Vektoren von Lichtbeiträgen dargestellt.

Zu der optischen Anordnung 300 ist ein Detailausschnitt 300a gezeigt. Der Detailausschnitt 300a zeigt dabei einen Teil des Flächenlichtmodulators 310 mit zwei Kippspiegeln und einen Teil des Phasenelements 320. Die optische Anordnung 300 weist dabei einen - Flächenlichtmodulator 310 und ein Phasenelement 320, das als diffraktives optisches Element (DOE) ausgeführt sein kann, auf. Weiterhin weist die optische Anordnung 300 ein optisches System 330 auf. Dieses optische System weist einen Strahlteiler 331, eine erste Linse 333, eine Blende 335 und eine zweite Linse 337 auf.

Der Flächenlichtmodulator 310 ist in dem dargestellten Fall unter Verwendung einer analogen Kippspiegelanordnung hergestellt. Weiterhin wären beispielsweise Systeme denkbar, die mikro-elektromechanische System oder digitale Mikrospiegelanordnungen (DMD, digital micromirror device) oder auch Flüssigkristallanordnungen verwenden.

Der gesamte Aufbau, d. h. die optische Anordnung 300 kann dabei folgendermaßen beschrieben werden. Eine einfallende Lichtwelle 340, die mit u₀=A₀·e^{jkz} beschriftet ist, die somit eine ebene Lichtwelle 340 sein kann, fällt, aus einer Richtung, die im Wesentlichen senkrecht zu einer optischen Achse ist, z.B. auf einen Strahlteiler. Der Strahlteiler wiederum reflektiert bzw. lenkt den einfallenden Lichtstrahl (bzw. somit die einfallende ebene (Licht-)Welle 340) ab, unter anderem, in Richtung des Phasenelements 320 und des Flächenlichtmodulators 310, sodass die abgelenkte, einfallende Welle sich im Wesentlichen parallel zu der optischen Achse der Anordnung ausbreitet. Die ebene Welle durchläuft dann ein erstes Mal das Phasenelement 320 und erfährt in unterschiedlichen örtlichen Bereichen unterschiedliche Phasenbeiträge. Die mit unterschiedlichen Phasenbeiträgen beaufschlagte ebene Welle wird von dem Flächenlichtmodulator 310 in den verschiedenen Bereichen, die beispielsweise in dem Detailausschnitt 300a dargestellt sind, reflektiert (remittiert) bzw. in unterschiedliche Strahlengänge gebracht. Hierbei sind die Abmessungen eines einzelnen Kippspiegels des Flächenlichtmodulators beispielsweise derart, dass Beugungsphänomene eine Rolle spielen. Diese reflektierte bzw. gebeugte Welle erfährt bei dem zweiten Durchgang durch das Phasenelement 320 eine weitere Änderung der Phase in verschiedenen Bereichen des Phasenelements 320. Diese phasenveränderte bzw. phasenmodulierte (und optional in der Amplitude modulierte) Welle verläuft durch den Strahlteiler 331 und die erste Linse 333. Die erste Linse 333 mit einer Brennweite f₁ fokussiert das Lichtfeld in einer Blende 335. Diese Blende 335 kann wiederum als Ausblend-Blende verstanden werden, die nur eine nullte Beugungsordnung des modulierten Lichtfeldes passieren lässt. Weiterhin kann die Blende 335 auch als optisches Tiefpassfilter ausgelegt sein, wobei dieses optische Tiefpassfilter ausgelegt ist, um mehrere Bereiche oder mehrere benachbarte Bereiche 310a, 310b des Flächenlichtmodulators 310 zu einer komplexen Modulationszelle zu überlagern. In einem Abstand einer Brennweite f₂ (d. h. der Brennweite der zweiten Linse 337) von der Blende 335 befindet sich die zweite Linse 337. Diese zweite Linse 337 kann ausgelegt sein, um das Lichtfeld auf einen Schirm abzubilden, der in Fig. 3a in einem Abstand f₂ von der zweiten Linse 337 vorgesehen ist.

Weiterhin ist in Fig. 3a ein Detailausschnitt 300a dargestellt. Dieser Detailausschnitt 300a zeigt einen Abschnitt (beispielsweise mit zwei Kippspiegeln) des Flächenlichtmodulators 310 und einen Abschnitt des Phasenelements 320. Der Flächenlichtmodulator 310 weist hierbei zwei Bereiche 310a und 310b auf. Diese zwei Bereiche 310a und 310b entsprechen den Pixeln bzw. Sub-Bildpunkten p₁ und p₂. Diese Bereiche weisen je einen (also insgesamt zwei) Kippspiegel auf, die geeignet sind, um ein Lichtfeld in einen Strahlengang zu reflektieren oder in einem Strahlengang zu modulieren. Beispielsweise kann ein einzelner Kippspiegel eine ortsabhängige (über der Ausdehnung des Kippspiegels variable) Phasenmodulation des Lichtfelds bewirken, wobei ein Ausmaß der Phasenmodulation beispielsweise durch die Auslenkung des Kippspiegels einstellbar ist. Beispielsweise kann der erste, in dem Bereich 310a angeordnete Kippspiegel eine erste räumliche Phasenmodulation des Lichtfelds bewirken. Der zweite, in dem Bereich 310b angeordnete Kippspiegel kann eine zweite räumliche Phasenmodulation des Lichtfeldes bewirken. Dem Bereich 310a, d. h. dem Pixel bzw. Sub-Bildpunkt p₁, bzw. einem ersten Kippspiegel sind zwei Bereiche des Phasenelements 320 zugeordnet, ein Bereich 320a und ein Bereich 320b. in dem gezeigten Fall sind die Bereiche 320a, 320b des Phasenelements 320 mit unterschiedlichen Dicken gezeigt, wobei wiederum ein Phasenversatz (zwischen Lichtwellen, die durch den ersten Bereich 320a verlaufen, und Lichtwellen, die durch den zweiten Bereich 320b verlaufen) durch diese Bereiche 320a, 320b unterschiedlicher Dicke eingestellt werden kann. Der Phasenunterschied zwischen den beiden Bereiche 320a und 320b ist (bei einmaligem Durchlauf) mit π/2 angegeben, was einem Phasensprung von 90° entspricht oder einem um 90 Grad phasenversetzten Feld. Somit kann der Flächenlichtmodulator 310, bzw. beispielsweise der erste Bereich 310a oder der erste Kippspiegel, so verwendet werden, dass dieser geeignet ist, einen Strahlengang zu modulieren bzw. einzustellen, wobei dieser von den Bereichen 320a, 320b des Phasenelements 320 beeinflusst wird. Analog dazu kann der Bereich 310b des Flächenlichtmodulators 310 bzw. der zweite Kippspiegel verwendet werden. Dieser Bereich 310b kann einem Pixel bzw. Bildpunkt, p₂ entsprechen. Diesem Bereich 310b bzw. dem zweiten Kippspiegel sind wiederum zwei Bereiche 320c, 320d des Phasenelements 320 zugeordnet. Die Differenz der Phasenänderungen zwischen den zwei Bereichen 320c, 320d entspricht wiederum (bei einmaligem Durchlauf einer Welle) 90 Grad bzw. π/2. Somit ist es möglich, mit den beiden Bereichen 310a, 310b jeweils um 90 Grad phasenverschobene Lichtfelder zu erzeugen (sowie bei zweimaligem Durchlauf einen Phasenbeitrag von 180 Grad zu liefern). Zwischen den Bereichen 320a, 320b und den Bereichen 320c, 320d ist wiederum ein Phasenversatz vorgesehen. Dieser ist mit 0,25π angegeben, dadurch ist es möglich, Phasenbeiträge einzustellen, so dass die Phasenbeiträge in dem ersten Bereich und in dem zweiten Bereich bei zweimaligem Durchlauf durch das Phasenelement einen Phasenunterschied von 90 Grad aufweisen.

Ein einzelner Kippspiegel, der beispielsweise einem Bereich 310a, 310b oder anderen Bereichen des Flächenlichtmodulators 310 entsprechen kann, erzielt einen ortsabhängigen Phasenbeitrag. Ein solcher Kippspiegel 311a, 311b weist dabei die Möglichkeit des Drehens (Kippens, Verkippens) des Kippspiegels 311a,311b um eine Achse auf. Weiterhin sei darauf hingewiesen, dass die Kippspiegel und das Phasenelement beispielsweise derart angeordnet beziehungsweise ausgelegt sind, dass zwei Bereiche des Kippspiegels, die sich aufgrund einer mechanischen Verkoppelung bei einer Auslenkung des Kippspiegels im Hinblick auf eine optische Achse in entgegengesetzte Richtungen bewegen, zwei Bereichen des Phasenelements, die unterschiedliche Phasenbeiträge liefern, zugeordnet sind. So kann der Kippspiegel beispielsweise entsprechend einer Wippe ausgelegt sein, so dass entgegengesetzte Seiten einer durchgängigen Struktur in entgegengesetzte Richtungen, beispielsweise in Richtung der optischen Achse betrachtet, ausgelenkt werden. Dies ist entsprechend in der Detaildarstellung durch Pfeile 315a, 316a angedeutet.

Weiterhin weist Fig. 3a eine Darstellung 301 auf, die eine komplexe Ebene eines Lichtfeldes beschreibt. Dabei weist die Darstellung 301 eine Abszisse 301a, die einer Realteilachse entspricht und eine Ordinate 301b, die einer Imaginärteilachse entspricht, auf. Weiterhin ist in der Darstellung ein Vektor 302a gezeigt, der einem (Gesamt-) Lichtbeitrag des Pixels p₁ entspricht. Im Gegensatz zu Fig. 2 wird nicht zwischen einem Pixel 202a und 202c unterschieden, sondern der Pixel p₁ kann eine Lichtwelle mit einer Phase sowohl in positiver Realteilrichtung als auch in negativer Realteilrichtung erzeugen. Dass der Vektor 302a so dargestellt wird, liegt an der Wahl der Bereiche 320a, 320b des Phasenelements 320. In der Detaildarstellung 300a kann erkannt werden, dass (bei zweimaligem Durchlauf) ein Phasenunterschied von 180° zwischen dem Lichtbeitrag eines "oberen" ersten Bereichs des Pixels p₁ bzw. Kippspiegels und einem Lichtbeitrag eines "unteren" zweiten Bereich des Pixels p1 bzw. Kippspiegels besteht. Analog dazu kann der Vektor 302b, der dem Pixel p₂ entsprechen kann, gesehen werden. Auch bei diesem ist es möglich, durch eine Einstellung des Kippspiegels einen Phasenversatz von 180° bzw. π zu erzielen. Dadurch ist es möglich, eine Feldstärke oder eine negative Feldstärke durch einen einzelnen Pixel (bzw. Kippspiegel 311a, 311b) im Zusammenwirken mit dem Phasenelement 320 (bzw. zwei Bereichen des Phasenelements 320) zu erzielen.

An diesem Ausführungsbeispiel kann weiterhin gesehen werden, dass der Flächenlichtmodulator 310, der in diesem Fall einer analogen Kippspiegelanordnung entspricht, und das Phasenelement 320 und das optische System 330 entlang einer (durchgängigen) optischen Achse angeordnet sind. Diese durchgängige optische Achse unterstützt eine gute Abbildungsqualität durch das optische System 330 bzw. die Abbildungsqualität des gesamten Aufbaus bzw. optischen Anordnung 300. Das Phasenelement 320 ist in dem gezeigten Fall in einem geringen Abstand von dem Flächenlichtmodulator 310 dargestellt. Dieser Abstand kann beispielsweise zu 2 mm gewählt sein. Andere Abstände können aber, je nach Ausführung des Flächenlichtmodulators 310 oder des Phasenelements 320 oder der einfallenden Lichtwelle, sinnvoll sein.

Die optische Anordnung 300 kann auch so beschrieben werden, dass der Flächenlichtmodulator 310 mindestens einen Bereich (beispielsweise 310a oder 310b usw. bzw. einen Pixel) mit einem hier betrachteten Strahlengang (auch als "ausgezeichneter Strahlengang" bezeichnet) aufweist. Dieser Strahlengang ist dahin gehend definiert, dass der Strahlengang zu einer Überlagerung beitragen kann. Weiterhin ist in dem gewählten Beispiel das Phasenelement 320 zwischen einem Flächenlichtmodulator 310 und einem Bereich der Überlagerung, der beispielsweise im optischen System 330 liegt, vorgesehen. Weiterhin ist das Phasenelement 320 so ausgelegt, dass die (resultierende) Phase des betrachteten Strahlengangs bzw. die (resultierende) Phase des (gesamten) Lichtbeitrags des betrachteten Strahlengangs in dem Bereich der Überlagerung eine bestimmte Phase aufweist. Diese Phase kann bezogen auf die Phase des einfallenden Lichtes, beispielsweise wie in dem Beispiel gezeigt, 0, 0,5π, π und 1,5π betragen.

Weiterhin kann der Flächenlichtmodulator 310 so ausgelegt sein, dass dieser geeignet ist, mehrere unterschiedliche, ausgezeichnete Strahlengänge (auf Fig. 3a bezogen: mithilfe der einzelnen Kippspiegel) zu modulieren. Dabei kann jeder dieser Strahlengänge jeweils ausgelegt sein, um zu einer Überlagerung beizutragen. In anderen Worten, jeder der zwei Kippspiegel 311a, 311b liegt in einem der Strahlengänge, die überlagert werden. Dies kann auch dahin gehend verstanden werden, dass ein jeweiliger Strahlengang so beeinflusst wird, dass dieser Strahlengang eine gewünschte Phase hat, bzw. dass der Lichtbeitrag eine gewünschte Phase nach dem Durchlaufen aufweist. Damit ist das Phasenelement 320 ausgelegt, um die Phasen der Lichtbeiträge, die sich entlang mehrerer unterschiedlicher, ausgezeichneter Strahlengänge ausbreiten (beispielsweise über den ersten Kippspiegel 311a oder über den zweiten Kippspiegel 311b), unterschiedlich stark zu ändern. Beispielsweise ist ein Phasenbeitrag des Phasenelements in einem Strahlengang über den zweiten Kippspiegel 311b bei zweimaligem Durchlauf durch das Phasenelement um π /2 größer als ein Phasenbeitrag in einem Strahlengang über den ersten Kippspiegel 311a. Weiterhin kann die Anordnung 300 so beschrieben werden, dass der Flächenlichtmodulator 310 so ausgelegt ist, dass verschiedene Bereiche 310a, 310b des Flächenlichtmodulators 310 ausgelegt sind, um zwei unterschiedliche, ausgezeichnete Strahlengänge zu modulieren. Dabei sind die Strahlengänge jeweils ausgelegt, um zu einer Überlagerung beizutragen. Das Phasenelement 320 ist hierbei ausgelegt, um eine Differenz der Phasenänderung der Lichtbeiträge, die sich entlang der zwei unterschiedlichen, ausgezeichneten Strahlengänge ausbreiten, beispielsweise von 90°±10° einzustellen. Dies ist gleichbedeutend mit einer Differenz von näherungsweise π/2 zwischen beispielsweise den Bereichen 320a, 320b und den Bereichen 320c,320d des Phasenelements 320. Ein Unterschied der Phasenbeiträge der Bereiche 320a,320b, die dem gleichen Kippspiegel zugeordnet sind, beträgt beispielsweise π (gerechnet bei zweimaligem Durchlauf durch das Phasenelement). Das gleiche gilt beispielsweise für den Bereich 320c und den Bereich 320d des Phasenelements 320, bei welchen die Differenz zwischen der Phasenänderung bzw. der Phasenbeiträge wiederum π bzw. näherungsweise 180° beträgt.

Von diesen Ausführungsbeispielen kann ein allgemeines Ausführungsbeispiel abgeleitet werden, in welchem nicht nur zwei, sondern eine andere Anzahl größer als zwei von Bereichen des Flächenlichtmodulators 310 (oder eine größere Anzahl an Kippspiegeln) ausgelegt ist, um mehrere Strahlengänge zu modulieren. Hierbei sind die Bereiche des Flächenlichtmodulators 310 ausgelegt, um mehrere Strahlengänge zu modulieren, d. h. einer Anzahl von mindestens zwei Strahlengängen zu modulieren, wobei jeder der Bereiche des Flächenlichtmodulators 310 mehreren Bereichen des Phasenelements 320 zugeordnet ist. Durch diese Maßnahme könnte beispielsweise eine Auflösung in Bezug auf die Anzahl der Bereiche des Flächenlichtmodulators 310 erhöht werden. Das Ausführungsbeispiel, das in Fig. 3a gezeigt ist, zeigt dabei, dass beispielsweise vier Bereiche des Phasenelements, d. h. die Bereiche 320a, 320b, 320c und 320d des Phasenelements 320 mit unterschiedlicher Phasenbeeinflussung zwei Bereichen des Flächenlichtmodulators 310, d. h. den Bereichen 310a und 310b, zugeordnet sind, um zumindest zwei ausgezeichnete Strahlengänge zu modulieren, um eine komplexe Modulationszelle zu bilden.

Als sinnvoller Strahlengang kann angegeben werden, dass dieser Strahlengang zunächst über den Strahlteiler 331, dann über das Phasenelement 320 und dann über den Flächenlichtmodulator 310 verläuft. Der Strahlengang läuft gefolgt davon wieder über das Phasenelement 320, den Strahlteiler 331 und dann über das optische System 330. Im Bereich des optischen Systems 330 durchläuft der Strahlengang zunächst die erste Linse 333, danach die Blende 335 und zuletzt die zweite Linse 337. Dieser Strahlengang ist sinngemäß in Fig. 3a dargestellt. Allerdings sei darauf hingewiesen, dass jedem Kippspiegel beispielsweise ein zugehöriger Strahlengang zugeordnet sein kann. Wie hier zu sehen ist, kann es zweckmäßig sein, dass Elemente des optischen Systems 330 (hier der Strahlteiler 331) vor den beiden Modulatoren 310 und 320 (oder auch zwischen den beiden Modulatoren 310, 320) durchlaufen wird. Eine Bedingung ist aber, dass die Überlagerung (hier beispielsweise im Bereich der Blende 335) der zu einer komplexen Modulationszelle gehörenden Strahlengänge erst nach dem Durchlaufen des Flächenlichtmodulators 310 und des Phasenelements 320 erfolgt. An der Beschreibung des Strahlengangs ist zu erkennen, dass das Phasenelement 320 zweimal von dem Strahlengang passiert wird. Diese Eigenschaft kann bei der Auslegung des Phasenelements 320 berücksichtigt werden, da diese gegebenenfalls andere Eigenschaften der Phasenabstufung nach sich zieht. Würde das Phasenelement beispielsweise bei einem anderen Strahlengang nur einmal durchlaufen, so könnte es sinnvoll sein, die entsprechenden (relativen) Phasenbeeinflussungen bzw. Phasenbeiträge zu verdoppeln.

Fig. 3a zeigt somit ein komplexes Modulationsverfahren mit einem reflektiven, analogen Kippspiegel-SLM 310 und einem statischen Phasenelement 320. Benachbarte SLM-Pixel werden um 0,5π phasenverschoben (aufgrund des zweimaligen Durchlaufs Phasenverschiebung 0,25π zwischen Bereichen 320a,320c und zwischen Bereichen 320b,320d). Sie modulieren aufgrund eines Phasensprungs von π entlang ihrer Kippachse (also beispielsweise aufgrund des Phasensprungs von 0,5π pro Durchlauf zwischen den Bereichen 320a,320b und zwischen den Bereichen 320c,320d) in zwei Richtungen in der komplexen Ebene. Ein komplexes Makropixel besteht aus den zwei Kippspiegeln p₁ und p₂ (in Verbindung mit den vier Bereichen 320a-320d des Phasenelements 320).

Besonders vorteilhaft lässt sich die vorgestellte Erfindung mit einer analogen Kippspiegelmatrix (als Beispiel vorteilhafte Ausführung für SLM, einem Flächenlichtmodulator 310) realisieren. Hierbei wird ein komplexes Makropixel aus mehreren (mindestens zwei) Kippspiegeln 311 erzeugt, welche mit einem speziell angepassten statischen Modulator (Phasenelement 320) auch negative Feldstärken erzeugen können. Dazu wird ein Phasensprung von π mittig entlang jedes Kippspiegels 311 ausgerichtet. Dies bewirkt einen Vorzeichenwechsel des modulierten Feldes in Abhängigkeit des Kippwinkelvorzeichens (Fig. 3a).

Zusätzlich wird der statische Modulator 320 genutzt, um die Beiträge der Pixel in der komplexen Ebene auszurichten. In der Ausführungsform mit einer komplexen Modulationszelle aus zwei Kippspiegeln, wie in Fig. 3a gezeigt, erreicht man dies mit einer Phasendifferenz von 0,5π der beiden Pixel zueinander. Größere Modulationszellen, beispielsweise vier Kippspiegel im Zusammenspiel mit statischen Phasenschritten von 0,25π im DOE, sind mit der vorgestellten Erfindung ebenfalls realisierbar. Die Vergrößerung der Modulationszelle bewirkt eine Verbesserung der komplexen Auflösung, d.h. eine präzisere Diskretisierung der darstellbaren komplexen Vektoren.

Zur Anordnung der Modulatoren kann noch angefügt werden, dass der (statische) (Phasen-)Modulator 320 beispielsweise in geringem Abstand zum (programmierbaren) SLM 310 angeordnet werden kann. Gleichbedeutend dazu kann der (statische) (Phasen-)Modulator 320 auch in einer konjugierten optischen Ebene angebracht werden (siehe Fig. 4). Dies kann die Justierung und damit die praktische Realisierung vereinfachen.

Die Phasensprung-Anpassung zur Erzeugung negativer Feldstärken wurde auf Basis einer reinen Bauelement-Integration bereits beschrieben [5]. Die vorgestellte Erfindung realisiert diese Funktion mit einem flexiblen, optischen Systemaufbau unter Nutzung des zusätzlichen statischen Modulators (Phasenelements 320). Dies realisiert enorme kostentechnische Vorteile und ermöglicht erstmalig die Nutzung mehrerer Lichtwellenlängen.

In der Realisierungsoption mit Kippspiegelmatrizen und Phasensprung-DOE (Fig. 3a) ist bereits jetzt klar, dass die Größe einer komplexen Modulationszelle auf zwei Pixel verkleinert werden kann. Dies steigert die Anzahl der komplexen Modulationszellen bei gleichbleibender SLM-Auflösung um mindestens 100%. Dies war zuvor nur mit einem aufwendigen Eingriff in den Herstellungsprozess möglich [5]. Mit dem vorgestellten Verfahren kann dies kostengünstig mit einem nach spezifischen Vorgaben gefertigten Standardbauelement erreicht werden. Da der SLM selbst nicht verändert wird, können statische Phasenmodulatoren bzw. Phasenelemente (z.B. DOEs) für verschiedene Wellenlängen entworfen und nach Bedarf einfach mechanisch für einen multispektralen Betrieb gewechselt werden.

Ergänzend ist zu sagen, dass Fig. 3a einen ortsaufgelösten Modulationsbereich eines Pixels bei Bezugszeichen 350 zeigt. Es ist ersichtlich, dass die Amplitude über dem Ort x (zwischen -p/2 und +p/2) nicht bzw. kaum schwankt. Die Phase variiert hingegen in dem Beispiel bei Bezugszeichen 350 etwa zwischen -135 Grad und +135 Grad.

Eine Phasenfunktion über eine Mehrzahl von Kippspiegeln ist bei Bezugszeichen 321 skizziert, und ein Ausschnitt aus der Phasenfunktion ist bei Bezugszeichen 317 gezeigt (hier für zwei Kippspiegel). Eine Parametrisierung (über der Ortskoordinate x) ist bei Bezugszeichen 317 ersichtlich. Ferner zeigt Fig. 3a die erzeugten Modulationswerte in der dargestellten Winkelstellung (in der gezeigten Winkelposition) in der komplexen Ebene (bei Bezugszeichen 301). Der Kippspiegel wirkt hier als reiner Phasenmodulator (wobei als zusammen mit einem definierten optischen System allerdings auch eine Amplitudenmodulation erreicht werden kann). Ein Kurvenparameter ist hierbei die Ortskoordinate (x) innerhalb eines Mikrospiegels der Seitenlänge p.

Ergänzend sei darauf hingewiesen, dass die Anordnung gemäß Figur 3a optional auch verändert werden kann. Das Ausführungsbeispiel gemäß der Figur 3a zeigt die Erzeugung eines Phasensprungs für Kippspiegel mittels eines statischen Phasenelements (siehe auch Fig. 3b). Die Einführung eines solchen Phasensprungs in Kombination mit Kippspiegelbauelementen ergibt auch ohne eine Positionierung in der komplexen Ebene, d.h. ohne die 0.25 pi Phasendifferenz in Bezugszeichen 300a, Sinn. Man erreicht so negative Feldstärken, die z.B. für die Lithografie hilfreich sind.

Zur weiteren Veranschaulichung werden im Folgenden Phasenbeiträge entlang eines Lichtwegs in der optischen Anordnung 300 gemäß Fig. 3a Bezug nehmend auf die Fig. 3b näher beschrieben.

Eine erste schematische Darstellung 360 beschreibt einen Phasengang einer einfallenden Wellenfront in Abhängigkeit von einer Position x (wobei x-Werte zwischen -p/2 und +p/2 einem Kippspiegel zugeordnet sind). Wie aus der schematischen Darstellung 360 unschwer ersichtlich ist, ist die Phase für x zwischen -p/2 und +p/2 zumindest näherungsweise konstant (Annahme Ebene Welle).

Die Ebene Welle fällt dann (beispielsweise von dem Strahlteiler 331 kommend) auf das Phasenelement 320 und wird beispielsweise durch die Bereiche 320a,320b des Phasenelements 320 in Ihrer Phase beeinflusst (wobei die Bereiche 320a,320b des Phasenelements beispielsweise einen Bereich zwischen x=-p/2 und x=+p/2 im Wesentlichen abdecken, also etwa "vor dem Kippspiegel 311a" angeordnet sind. Eine Grenze zwischen dem Bereich 320a und dem Bereich 320b des Phasenelements 320 liegt beispielsweise zumindest näherungsweise (in Richtung der optischen Achse) vor einer Mitte des Kippspiegels 311a, und eine Gesamtbreite der Bereiche 320a,320b entspricht beispielsweise in etwa einer Breite des Kippspiegels (zum Beispiel p).

Wie oben erläutert betägt ein Unterschied der Phasenbeiträge der Bereiche 320a,320b etwa 0,5π. Eine schematische Darstellung 370 beschreibt einen örtlichen Phasenverlauf des einfallenden Lichts nach dem Phasenelement. Aufgrund der unterschiedlichen Phasenbeiträge der Bereiche 320a,320b des Phasenelements weist das einfallende Licht beispielsweise bei x=0 (also etwa in der Mitte des Kippspiegels) einen Phasensprung von 0,5π auf.

Der Kippspiegel bewirkt nun einen weiteren Phasenbeitrag, der von der Stellung des Kippspiegels abhängig ist, und der in der schematischen Darstellung 380 für verschiedene Positionen des Kippspiegels gezeigt ist.

Bei einer ersten Ausrichtung des Kippspiegels, die durch eine durchgezogene Linie gezeigt ist, liefert der Kippspiegel in seinem "oberen" Bereich (zwischen x=-p/2 und x=0) einen "beschleunigenden" Phasenbeitrag (kürzerer Lichtweg) und in seinem "unteren" Bereich (zwischen x=0 und x=+p/2) einen verzögernden Phasenbeitrag (längerer Lichtweg), wobei die Phasenbeiträge über dem Ort (Koordinate x) beispielsweise im Wesentlichen linear variieren. Der Phasenbeitrag ist bei Bezugszeichen 382a gezeigt.

Bei einer zweiten Ausrichtung des Kippspiegels, die durch eine gestrichelte Linie gezeigt ist, liefert der Kippspiegel über seine gesamte Ausdehnung in x-Richtung einen konstanten Phasenbeitrag. Die zweite Ausrichtung entspricht hierbei beispielsweise einer Ausrichtung der Kippspiegel-Oberfläche in etwa senkrecht zur optischen Achse. Der Phasenbeitrag ist bei Bezugszeichen 382b gezeigt.

Bei einer dritten Ausrichtung des Kippspiegels, die durch eine Strich-Punkt-Linie gezeigt ist, liefert der Kippspiegel in seinem "oberen" Bereich (zwischen x=-p/2 und x=0) einen verzögernden Phasenbeitrag (längerer Lichtweg) und in seinem "unteren" Bereich (zwischen x=0 und x=+p/2) einen "beschleunigenden" Phasenbeitrag (kürzerer Lichtweg), wobei die Phasenbeiträge über dem Ort (Koordinate x) beispielsweise im Wesentlichen linear variieren. Der Phasenbeitrag ist bei Bezugszeichen 382c gezeigt.

Der Phasenbeitrag des Kippspiegels, wie bei Bezugszeichen 380 gezeigt, addiert sich zu dem Phasenverlauf des einfallenden Lichts, wie bei Bezugszeichen 370 gezeigt, so dass sich ein Phasenverlauf des vom Kippspiegel reflektierten bzw. gebeugten Lichts wie in der schematischen Darstellung 390 gezeigt ergibt. Es ist ersichtlich, dass die Phasenverläufe über der x-Koordinate in Abhängigkeit von einer Ausrichtung des Kippspiegels stark unterscheiden.

Bei einem weiteren Durchgang durch das Phasenelement erfolgt eine weitere Beeinflussung des Phasenverlaufs, wobei sich die Phasenbeiträge in den Bereichen 320a,320b des Phasenelements um etwa 0,5π unterscheiden. Nach dem erneuten Durchlauf des Lichts durch das Phasenelement 320 ergibt sich ein Phasenverlauf wie in einer schematischen Darstellung 396 gezeigt. Durch den zweimaligen Durchlauf durch das Phasenelement ergibt sich in der Mitte des Kippspiegels (beispielsweise bei x=0) ein Phasensprung von etwa π. Die Verläufe der Phase unterscheiden sich deutlich in Abhängigkeit von der Ausrichtung des Kippspiegels, wie durch Phasenverläufe 398a (erste Ausrichtung), 398b (zweite Ausrichtung) und 398c (dritte Ausrichtung) angedeutet ist.

Ergänzend sei darauf hingewiesen, dass die Amplitude des Lichts vom Kippspiegel zwischen x=-p/2 und x=+p/2 beispielsweise näherungsweise konstant ist. Es wird im Folgenden davon ausgegangen, dass die Lichtbeiträge eines Kippspiegels überlagert abgebildet werden. Dies entspricht im Wesentlichen einer phasenrichtigen Summation der Lichtbeiträge, die von den Positionen zwischen x=-p/2 und x=+p/2 stammen.

Es ist hier unschwer erkennbar, dass sich bei "symmetrischer" Ausrichtung des Kippspiegels die Lichtbeiträge des zumindest näherungsweise auslöschen, da Lichtbeiträge von einem ersten Bereich (zwischen x=-p/2 und x=0) und Lichtbeiträge von einem zweiten Bereich (zwischen x=0 und x=+p/2) um 180 Grad phasenverschoben sind. Eine nähere Analyse zeigt weiterhin, dass eine Summe der Lichtbeiträge bei der ersten Ausrichtung des Kippspiegels (durchgezogene Linie) und bei der zweiten Ausrichtung des Kippspiegels (Strich-Punkt-Linie) entgegengesetzte Phasen haben. Auch Amplituden der Summen-Lichtbeiträge sind im Übrigen über die Beeinflussung der Ausrichtung der Kippspiegel einstellbar.

Diesbezüglich sei angemerkt, dass der Summen-Lichtbeitrag aufgrund des Vorhandenseins des Phasenelements in der "Ruhestellung" des Kippspiegels (senkrecht zur optischen Achse) einen Vorzeichenwechsel aufweist. Daher ist eine große Phasenänderung schon durch eine vergleichsweise kleine Auslenkung des Kippspiegels erzielbar ("punktsymmetrischer Charakter" der Auslenkungs-Summenlichtphase-Kennlinie). Im Gegensatz dazu herrschten bei Fehlen des Phasenelements symmetrische Bedingungen, und ein Vorzeichenwechsel (Phasensprung von 180 Grad) wäre allenfalls bei sehr großer Auslenkung des Kippspiegels erzielbar, bei zusätzlich beschränkter Amplitude (Achsensymmetrischer Charakter der Auslenkungs-Summenlichtphase-Kennlinie). Im Übrigen ist durch Vorhandensein des Phasenelements bei manchen Ausführungsbeispielen auch ein erweiterter Amplitudenbereich einstellbar.

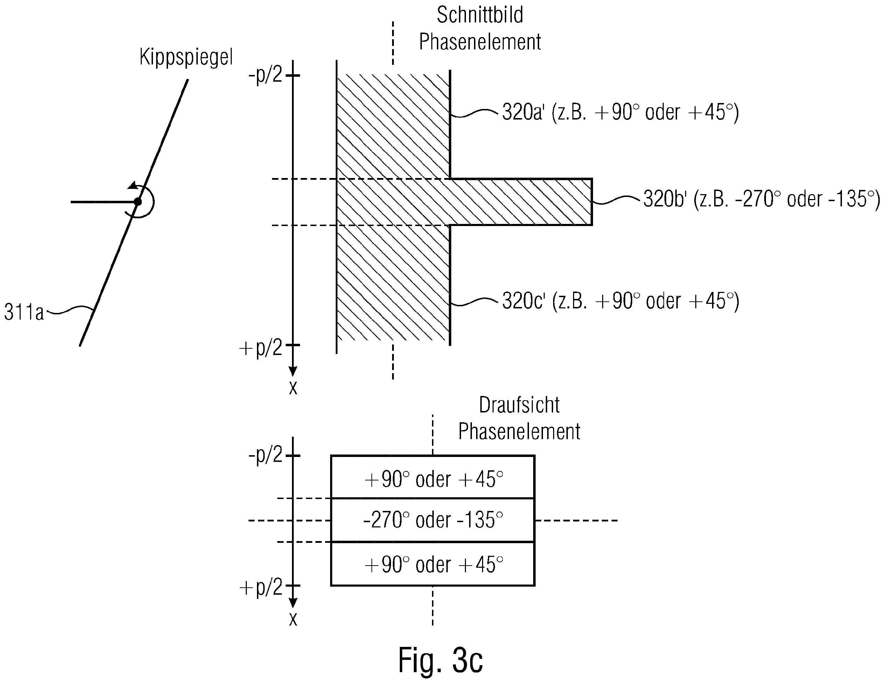

Ergänzend sei darauf hingewiesen, dass das Phasenelement auch anders ausgeführt sein kann. Beispielsweise können einem Kippspiegei auch drei oder mehr Bereiche des Phasenelements mit unterschiedlichen Phasenbeiträgen zugeordnet sein. Diesbezüglich sei auf den Ausschnitt eines Phasenelements, wie er in Fig. 3c im Querschnitt und in der Draufsicht gezeigt ist, verwiesen. Das in Figur 3c gezeigte Phasenelement kann beispielsweise an die Stelle des in Figur 3b gezeigten Phasenelements treten.

Es existiert so eine Möglichkeit, die Freiheit, mehrere Phasenwerte auf dem Phasenelement für ein Modulatorpixel vorzusehen, gewinnbringend mit Bezug auf das spektrale Verhalten der Anordnung zu nutzen. Dieses Konzept (für ein Mikrospiegelbauelement) ist beispielsweise in Quelle [5] erklärt. Bei Ausführungsbeispielen gemäß der Erfindung wird eine ähnliche Funktionalität mit dem externen Phasenelement (statt mit einer fertigungstechnischen Änderung) erreicht. Man kann beispielsweise für eine gewünschte Modulatorpixel-Phasenverschiebung von z.B. 90° verschiedene Phasenstufen (z.B. 90° und - 270°) vorgeben, die im örtlichen Mittel die gewünschte Phase erzeugen. Gleichzeitig ist das Verhalten dieses modifizierten Phasenverlaufs besser als bei der Wahl von nur einer Phasenstufe von 90°. Für weitere Details wird auch auf die Ausführungen weiter unten verwiesen.

### Ausführungsbeispiel gemäß Fig. 4

In Fig. 4 ist eine optische Anordnung 400 gezeigt. Fig. 4 zeigt hierbei eine äquivalente Realisierung des beschriebenen Modulationsverfahrens in einer 8f-Anordnung. Dabei wird das statische DOE (Phasenelement) 420 in einer konjugierten Ebene zum programmierbaren SLM (Amplituden-Flächenlichtmodulator) 410 angeordnet. Dieser Aufbau ist funktionell identisch mit dem Aufbau in Fig. 2.

Dabei weist die optische Anordnung 400 einen Flächenlichtmodulator 410 und ein Phasenelement 420 auf. Weiterhin weist die optische Anordnung 400 ein optisches System 430 auf, das mehrere Elemente umfasst. Zu dem optischen System kann eine erste Linse 431, eine zweite Linse 433, eine dritte Linse 435, eine Blende 437 und eine vierte Linse 439 gezählt werden. Der Abstand der ersten Linse 431 von dem Flächenlichtmodulator 410 entspricht näherungsweise einer Brennweite f der ersten Linse 431. Die zweite Linse 433 hat von der ersten Linse 431 einen Abstand der Summen der Brennweiten der beiden Linsen f+f bzw. in dem dargestellten Fall der doppelten Brennweite 2f. in einem Abstand einer Brennweite f ist das Phasenelement 420, das auch ein diffraktives optisches Element (DOE) sein kann, vorgesehen. In ebenfalls einem Abstand z.B. einer Brennweite f ist die dritte Linse 435 von dem Phasenelement 420 angebracht. Zwischen der dritten Linse 435 und der vierten Linse 439, die in einem Abstand von 2f vorgesehen sind, befindet sich die Blende 437. Auf der Blende 437 sind wiederum mögliche Ausprägungen von Beugungsordnungen dargestellt. Auch in diesem Ausführungsbeispiel kann die Blende 437 ausgelegt sein, um eine nullte Beugungsordnung passieren zu lassen. Höhere Beugungsordnungen, wie die ±1., die ±2., die ±3. usw., können von der Blende 437 ausgeblendet werden. Die Brennweiten der Linsen können natürlich verschieden sein, wobei dann die Abstände entsprechend anzupassen sind.

Die Blende 437 kann auch in diesem Ausführungsbeispiel eine Tiefpass-Wirkung erzielen, die mehrere (benachbarte) Bereiche des Flächenlichtmodulators 410 zu einem komplexen Makropixel (komplexe Modulationszelle) überlagern kann.

In dem dargestellten Ausführungsbeispiel fällt eine ebene Welle 440, die mit u₀=A₀·e^{jkz} beschrieben ist, von links auf den Flächenlichtmodulator 410, der mit SLM bezeichnet ist. Diese ebene Welle 440 bzw. ebene Wellenfront 440 weist eine Wellenlänge von λ auf, die ebenfalls in Fig. 4 angedeutet ist. Es kann die optische Anordnung 400 weiterhin derart beschrieben werden, dass das Phasenelement 420 mit beispielsweise einer geringen Toleranz von ±2mm in einer optisch konjugierten Ebene der Ebene des Flächenlichtmodulators 410 vorgesehen ist. Diese konjugierte optische Ebene ist durch ein Koordinatensystem angedeutet, das mit x' und y' bezeichnet ist. Das Koordinatensystem des SLMs bzw. des Flächenlichtmodulators 410 ist mit x und y bezeichnet (d. h. nicht optisch konjugiert).

Weiterhin weist Fig. 4 einen Schirm auf, auf den das komplexwertige Lichtfeld, das mithilfe des Flächenlichtmodulators 410, des Phasenelements 420 und des optischen Systems 430 erzeugt wird, abgebildet werden kann. Das Koordinatensystem des Schirms ist (analog zu dem Koordinatensystem des Flächenlichtmodulators 410) mit x und y bezeichnet (d. h. nicht optisch konjugiert).

In dem Ausführungsbeispiel gemäß Fig. 4 ist durch die Periodizität des Phasenelements 420 angedeutet, dass dieser innerhalb einer Periode vier unterschiedliche Bereiche unterschiedlicher Phasenänderung aufweist. Weiterhin kann aber festgestellt werden, dass ein sinnvolles Ausführungsbeispiel auch derart gestaltet sein kann, dass mehrere Bereiche des Phasenelements 420, die mit mehreren Bereichen des Flächenlichtmodulators 410 eine komplexe Modulationszelle bilden, mindestens drei Bereiche mit unterschiedlichen Phasenbeeinflussungen aufweisen. Dies würde sich in Fig. 4 in einer Periodizität nach drei Stufen des DOEs, im Gegensatz zu den dargestellten vier Stufen des DOEs zeigen. Hierbei ist die Differenz zwischen einem Winkel einer ersten Beeinflussung und einem Winkel einer zweiten Beeinflussung maximal 180°. Dabei sind ein erster Winkel und ein zweiter Winkel der Phasenbeeinflussung stets so definiert, dass zwischen diesen beiden Winkeln kein dritter Winkel einer Phasenbeeinflussung liegt. Anders umschrieben ließe sich dies so formulieren, dass der erste Winkel und der zweite Winkel benachbart sind. Weiterhin ist das optische System 430 hierbei so ausgelegt, um eine Überlagerung der zu der komplexen Modulationszelle gehörenden Strahlengänge zu ermöglichen. Dies kann beispielsweise durch eine Überlagerung von drei Strahlengängen, die zu einer komplexen Modulationszelle gehören, ermöglicht werden.

Die beschriebene Möglichkeit, mit drei unterschiedlichen Bereichen der Phasenbeeinflussung, kann auch weiter verallgemeinert werden. Dabei weist das Phasenelement 420 mehrere Bereiche auf, die mit mehreren Bereichen des Flächenlichtmodulators 410 eine komplexe Modulationszelle bilden. Die mehreren Bereiche des Phasenelements 410 weisen dabei genau n Bereiche mit unterschiedlicher Phasenbeeinflussung auf. Ein vorteilhaftes Ausführungsbeispiel kann dabei so gestaltet sein, dass eine Differenz zwischen einem Winkel einer ersten Beeinflussung und einem Winkel einer zweiten Beeinflussung näherungsweise 360°/n ist. Mit "näherungsweise" kann bezeichnet werden, dass der Winkel der ersten Phasenbeeinflussung mit dem Winkel der zweiten Phasenbeeinflussung eine Differenz aufweist, die 360°/n mit einer Toleranz von 360°/2n ist. Hierin ist natürlich auch das Ausführungsbeispiel eingeschlossen, in dem die Winkel zwischen allen benachbarten Phasenbeeinflussungen näherungsweise 360°/n sind.

Durch den räumlich getrennten Aufbau des Phasenelements 420 von dem Flächenlichtmodulator 410 kann es vereinfacht möglich sein, eine mechanische Wechselbarkeit des Phasenelements zu erzielen. Dabei kann eine Mehrzahl von (unterschiedlichen, wechselbaren), beispielsweise statischen, Phasenelementen ausgelegt sein, um für mehrere Lichtwellenlängen einem Lichtfeld einen vorteilhaften Phasenversatz für ein komplexes Lichtfeld aufzuprägen. Weiterhin kann die getrennte mechanische Anbringung des Amplituden-Flächenlichtmodulators 410 von dem Phasenmodulator 420 eine Kalibrierung des Gesamtaufbaus erleichtern.

Als sinnvoller Strahlengang, der keine Streuung und Beugung und andere ungewollte ("parasitäre") Effekte berücksichtigt, d. h. eine Art funktioneller Strahlengang, kann angegeben werden, dass dieser Strahlengang zunächst über den Amplituden-Flächenlichtmodulator 410, gefolgt davon über das optische System 430 und das Phasenelement 420 läuft. Im Bereich des optischen Systems 430 durchläuft der Strahlengang zunächst die erste Linse 431, danach die zweite Linse 433, gefolgt von dem Phasenelement 420 (der nicht Teil des optischen Systems 430 ist). Danach durchläuft der Strahlengang die dritte Linse 435, die Blende 437 und zuletzt die vierte Linse 439. Dies ist sinngemäß in Fig. 4 dargestellt. Dahingegen ist es auch möglich, dass der Strahlengang zuerst das Phasenelement 420 (bspw. am Ort des Flächenlichtmodulators 410) und erst in Folge den Flächenlichtmodulator 410 (bspw. am Ort des Phasenelements 420) durchläuft. In diesem Ausführungsbeispiel ist weiterhin auch gezeigt, dass Elemente des optischen Systems 430 vor den beiden Modulatoren 410 und 420 oder zwischen den beiden Modulatoren 410, 420 durchlaufen wird. Eine Bedingung ist aber, dass die Überlagerung (hier beispielsweise im Bereich der Blende 437) der zu einer komplexen Modulationszelle gehörenden Strahlengänge erst nach dem Durchlaufen des Flächenlichtmodulators 410 und des Phasenelements 420 erfolgt.

In Fig. 4 ist demnach eine optische Anordnung 400 gezeigt, wobei der Flächenlichtmodulator 410 und das Phasenelement 420 eine Vielzahl von komplexen Modulationszellen bilden. Dies kann beispielsweise auch so verdeutlicht werden, dass das Phasenelement 420 eine Mehrzahl von Modulationszellen-fähigen Phasenabstufungen aufweist. Die Darstellung zeigt in dem gewählten Fall eine Möglichkeit von drei komplexen Modulationszellen (dreimal vier unterschiedliche Dicken des Phasenelements 420, bzw. dreimal vier unterschiedliche optische Weglängen und somit Phasenversätze). Die geringe Anzahl der komplexen Modulationszellen dient hierbei vor allem der besseren Übersichtlichkeit und Anschaulichkeit, es ist dabei eine Skalierung mit mehreren Tausend Modulationszellen mit der vorgestellten erfindungsgemäßen Lösung realisierbar. Weiterhin ist durch die Schnittbilddarstellung nicht ausdrücklich gezeigt, dass das Phasenelement 420 wie der Flächenlichtmodulator 410 ebenso wie das optische System 430 bzw. die optische Anordnung 400 eine Ausdehnung in der y-Achse besitzen können. Dabei ist selbstverständlich die Möglichkeit gegeben, dass auch in einer y-Achse weitere Bereiche des Flächenlichtmodulators 410 und auch weitere Bereiche des Phasenelements 420 vorgesehen sein können. Somit ist es möglich mit dem gezeigten Ausführungsbeispiel in mehrere Raumrichtungen eine Vielzahl von komplexen Modulationszellen zu erschaffen. Dabei soll das optische System 430 ausgelegt sein, um die Vielzahl von komplexen Modulationszellen getrennt abzubilden. Beispielsweise kann eine komplexe Modulationszelle als Bildpunkt auf den in Fig. 4 rechts dargestellten Schirm abgebildet werden.

Bei Fig. 4 ist es, analog dazu auch bei den Figen. 1, 2 und 3, möglich, dass das Phasenelement 420 ausgelegt ist, eine zeitveränderliche Beeinflussung der Phase zu ermöglichen. Das Phasenelement 420 kann damit auch als nichtstatisch bezeichnet werden. Dahingehend ist es auch möglich, dass das Phasenelement 420 so ausgelegt ist, dass dieser programmierbar bzw. einstellbar ist. Mit einem Phasenelement 420 nach den eben genannten Eigenschaften wäre es beispielsweise möglich, die Änderung der Phase während eines Betriebes zu ändern. Für ein solches nichtstatisches Phasenelement 420 kann beispielsweise ein Flüssigkristall-Phasenmodulator verwendet werden.

Hierbei ist zu erwähnen, dass durch die schnelle Modulation durch den Flächenlichtmodulator 410 eine langsame Modulation durch das Phasenelement 420 ausgeglichen werden kann. Es wäre beispielsweise denkbar, dass eine Änderung der Amplitude eines Lichtfeldes durch den Flächenlichtmodulator 410 beispielsweise um einen Faktor 10 schneller ist als eine Änderung der Beeinflussung der Phase durch das Phasenelement 420 (wobei sich Vorteile auch bereits bei einem Faktor von 2 ergeben können).

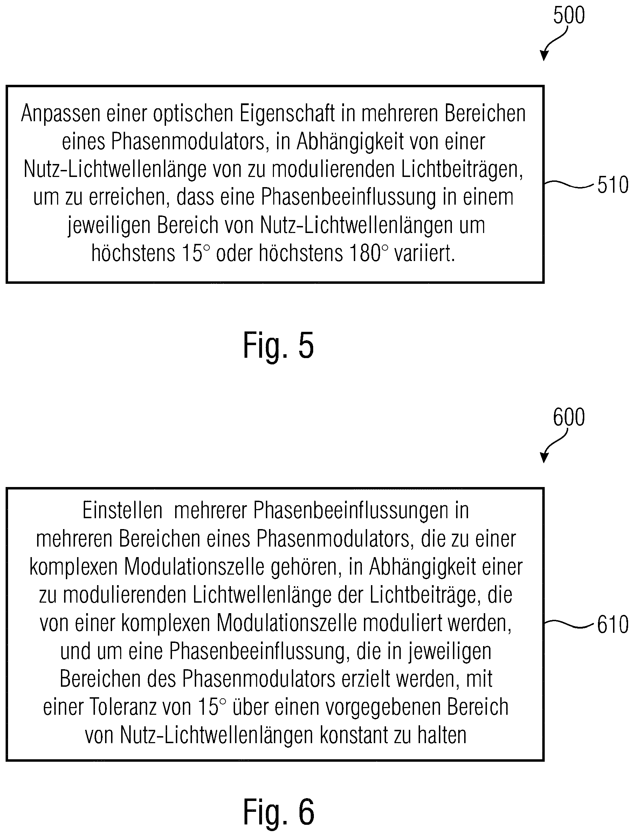

### Ausführungsbeispiel gemäß Fig. 5

Fig. 5 beschreibt ein Verfahren zum Betrieb eines kombinierten Flächenlichtmodulators zur Erzeugung eines komplexwertigen Lichtfeldes.

Um das Phasenelement bei einer einzelnen Wellenlänge zu betreiben, genügt es, eine ausreichende Anzahl (z. B. eine Anzahl von drei) von diskreten Phasenänderungen zu verwirklichen. Eine Überlagerung der Lichtbeiträge (mit diskret geänderten Phasen) in Zusammenhang mit einer eingestellten Amplitude der Lichtbeiträge lässt, je nach Genauigkeit der Amplitudenmodulation, eine sehr präzise Einstellung der Phasen, auch mit Winkeln, die zwischen den diskreten Phasenänderungen liegen, zu. Die genannten Phasenänderungen können beispielsweise 0°, 120° und 240° (bzw. 0, 2π/3 und 4π/3) betragen. Dabei muss stets beachtet werden, dass diese Phasenänderungen auf die Wellenlänge des Lichtbeitrages bezogen sind. Um beispielsweise eine Phasenverzögerung von 2π/3 zu erzielen, dies entspricht λ/3, muss der entsprechende Lichtbeitrag eine optische Weglänge durchlaufen, die um λ/3 länger ist als eine zu durchlaufende optische Weglänge eines Referenz-(Bezugs-)Lichtbeitrags. Somit ist die Phasenänderung eines einzelnen Lichtbeitrags, die mit einem statischen Phasenelement erzielt werden kann, auf eine Wellenlänge normiert. Soll für unterschiedliche Wellenlängen eine gewünschte (optimale) Phasenänderung erzielt werden können, ist es vorteilhaft, das Phasenelement entsprechend anzupassen.

Das Verfahren 500 umfasst dabei ein Anpassen 510 einer optischen Eigenschaft in mehreren Bereichen eines Phasenelements, in Abhängigkeit von einer Nutz-Lichtwellenlänge von zu modulierenden Lichtbeiträgen, um zu erreichen, dass eine Phasenbeeinflussung in einem jeweiligen Bereich des Phasenelements über einen Bereich von Nutz-Lichtwellenlängen um höchstens 180° variiert.

Es sei aber angemerkt, dass eine komplexe Modulation unterschiedlicher Lichtwellenlängen nicht zwingendermaßen ein zeitveränderliches, einstellbares oder programmierbaren Phasenelement erfordert, das eine absolute Genauigkeit der Phaseneinstellung in Bezug auf die Nutzwellenlänge besitzt. Die Ausführungsform mit einem einstellbaren Phasenelement stellt demnach ein Ausführungsbeispiel dar, das eine sehr gute Modulation auch bei Vorliegen einer wellenlängenabhängigen Veränderung der durch das Phasenelement erzielten Phasenänderung (in diesem Ausführungsbeispiel sind 180° genannt) erzielen kann. Als Grenzfall kann die Möglichkeit erklärt werden, mit einem statischen Phasenelement unterschiedliche Lichtwellenlängen (in einem Lichtwellenlängenbereich, zwischen einer minimalen und einer maximalen Wellenlänge) in Betrag und Phase zu modulieren. Dies kann dadurch erzielt werden, dass das statische Phasenelement so ausgelegt ist, dass für die Grenzen (die Grenzwellenlängen) des Lichtwellenlängenbereichs sichergestellt ist, dass durch eine amplitudenmodulierte Überlagerung der phasenmodulierten Lichtbeiträge ein Winkelbereich von 360° abgedeckt wird. An einem Beispiel mit drei Bereichen unterschiedlicher Phasenänderungen lässt sich das Beispiel so erläutern, dass für die maximale Wellenlänge beispielsweise eine Phasenänderung 0°, 90° und 180° (normiert auf die maximale Wellenlänge) beträgt. Damit würde für eine minimale Wellenlänge, die die Hälfte der maximalen Wellenlänge ist, die Phasenänderung demnach 0°, 180° und 360° (normiert auf die minimale Wellenlänge) betragen. Mit dieser Wahl der Phasenänderungen und der minimalen und maximalen Wellenlänge ist es möglich, die Wellenlängen zwischen (exklusive) der minimalen und (exklusive) der maximalen Wellenlänge in ihrer Phase (mit einem eingeschränkten Amplitudenbereich) einzustellen. Durch diese Ausführung eines statischen Phasenelements in Verbindung mit mehreren unterschiedlichen Wellenlängen kann der Bereich der erzielbaren Amplituden des Summen-Lichts gegebenenfalls stark eingeschränkt sein. Um einen (Summen-)Vektor mit allen Phasenwinkeln mit einer begrenzten Anzahl an (Beitrags-)Vektoren durch Addition der (Beitrags-)Vektoren erzielen zu können, sollte beispielsweise sichergestellt sein, dass alle Halbebenen mindestens einen (Beitrags-)Vektor aufweisen. "Alle Halbebenen" bezeichnet alle Ebenen, die von einer Nullpunkt-Gerade auf ihrer einen Seite begrenzt werden, wobei der Winkel der Nullpunkt-Gerade mit der Abszisse alle möglichen Werte annehmen kann. Diese allgemeine Aussage kann eine Identifizierungsmöglichkeit der benötigten diskreten Phasenänderungen darstellen. Diese Aussage gilt nicht, wenn mindestens zwei getrennte Phasenelemente vorliegen, in diesem Fall kann die Wahl der (Beitrags-)Vektoren für ein Phasenelement frei erfolgen, für die Gesamtzahl bzw. die Gesamt-Wirkung der Phasenelemente gilt die oben genannte Aussage, falls alle Phasenlagen, d. h. alle Winkel von 0° bis 360°, eines Summen-Vektors erzielt werden sollen, aber wiederum.

Somit ist ein einstellbares Phasenelement, das die Änderung der Phase im Betrieb beispielsweise durch eine geeignete Ansteuerung anpassen kann, auch bei einer deutlichen Abweichung von einer genauen Einstellung der Phasen der einzelnen Lichtbeiträge in der Lage, eine Phase (und indirekt eine Amplitude) eines Summen-Lichts sehr genau einzustellen. Wie bereits erwähnt, kann dabei im Betrieb die Änderung der Phase durch das Phasenelement an eine geänderte (auch im Betrieb wechselnde) Lichtwellenlänge angepasst werden. Es kann dabei auch das Ziel der Änderung sein, dass die diskreten Phasenschritte (bspw. mit 0, 2π/3 und 4π/3) innerhalb einer Modulationszelle des Phasenelements, d. h. die verschiedenen Bereiche des Phasenelements mit den unterschiedlichen Phasenänderungen, auch bei Änderung der Lichtwellenlänge, erhalten bleiben.

Zu der optischen Eigenschaft sei noch gesagt, dass die optische Eigenschaft eine Änderung einer Phase eines Lichtbeitrages ermöglichen kann. In den vorherigen Abschnitten wurde beispielsweise eine optische Weglänge genannt, die in unterschiedlichen Bereichen unterschiedlich lang ist, darauf soll die optische Eigenschaft aber nicht beschränkt sein. Vielmehr können auch andere, hierbei nicht erwähnte Möglichkeiten, die Phasenlage von mehreren Strahlengängen zueinander zu ändern, eingeschlossen sein.

### Ausführungsbeispiel gemäß Fig. 6

Fig. 6 beschreibt ein Verfahren zum Betrieb 600 einer optischen Anordnung zur Modulierung von unterschiedlichen Lichtwellenlängen mit folgendem Merkmal: Einem Einstellen 610 mehrerer Phasenbeeinflussungen in mehreren Bereichen eines Phasenelements, die zu einer komplexen Modulationszelle gehören. Das Einstellen 610 erfolgt dabei in Abhängigkeit einer zu modulierenden Lichtwellenlänge der Lichtbeiträge, die von der einen komplexen Modulationszelle moduliert werden, und um eine Phasenbeeinflussung, die in jeweiligen Bereichen des Phasenelements erzielt werden, z.B. mit einer Toleranz von 15° über einen vorgegebenen Bereich von Nutz-Lichtwellenlängen konstant zu halten. Die Einstellung der Phasenbeeinflussungen in mehreren Bereichen des Phasenelements kann beispielsweise durch Auswechseln des Phasenelements oder durch eine programmierbare Realisierung des Phasenelements erfolgen (wobei eine Einstellgeschwindigkeit des Phasenelements typischerweise langsamer als eine Einstellgeschwindigkeit des Flächenlichtmodulators ist).

Dieses Ausführungsbeispiel schafft ein Verfahren, das eine Modulation mit Hilfe der Phasen- und Amplituden-Flächenlichtmodulator-Anordnung von mehreren (unterschiedlichen) Lichtwellenlängen ermöglicht. Dabei wird durch ein Einstellen 610 mehrerer Bereiche eines Phasenelements erzielt, dass die Phasenbeeinflussungen (die bspw. in diskreten Abstufungen vorliegen) an eine zu modulierende (und sich ändernde oder geänderte) Lichtwellenlänge angepasst werden können. Dabei ist auch hier wieder eine Toleranz vorgesehen, da eine absolute (perfekte) Genauigkeit nicht erzielt werden kann, und auch mit dieser relativ großen Toleranz noch eine sehr gute Einstellung nach Betrag und Phase erfolgen kann. In diesem Zusammenhang sei auch auf das Ausführungsbeispiel gemäß Fig. 5 verweisen, in dessen Zusammenhang dies genau erklärt wird.

Durch die Verwendung der nullten Beugungsordnung wird aber diese Anpassung der Phasenänderungen erst sinnvoll möglich. Bei Verwendung einer höheren Beugungsordnung hängt der Ort dieser Beugungsordnung von der (gebeugten) Wellenlänge ab und bspw. eine Blende (Ausblend-Blende), die für eine Wellenlänge in Verbindung mit einer (höheren) Beugungsordnung ausgelegt ist, würde bei einer anderen Wellenlänge nicht mehr ihren vorgesehenen Zweck erfüllen.

Hierbei sein darauf hingewiesen, dass unterschiedliche Bereich einerseits zu einer komplexen Modulationszelle gehören können, selbstverständlich können aber auch unterschiedliche Bereiche zu unterschiedlichen Modulationszellen gehören. Weiterhin erfolgt in dem hier beschriebenen Ausführungsbeispiel des Betriebsverfahrens eine Einstellung mehrerer Phasenbeeinflussungen. Diese Einstellung kann selbstverständlich für unterschiedliche Bereiche unterschiedlich ausfallen. Als Beispiel kann der Fall angesehen werden, in dem mehrere Bereiche, die eine erste Modulationszelle bilden, an eine erste Lichtwellenlänge angepasst werden, und weiterhin ebenfalls mehrere Bereiche, die eine zweite Modulationszelle bilden, an eine zweite Lichtwellenlänge angepasst werden. Diese Möglichkeit ist in dem Betriebsverfahren auch enthalten, soll aber aus Gründen der Klarstellung hier nochmals erwähnt werden.

Ergänzend sei auf die Möglichkeit verwiesen, die weitgehend achromatische Lichtmodulation der aktuellen Erfindung durch geeignet aufgeteilte Bereiche des Phasenelements innerhalb von einem Bereich des Flächenlichtmodulators auszuführen. Kennzeichnend dafür ist die Ausbildung der gewünschten Phase des Lichtfeldes, die für einen oder mehrere Bereiche des Flächenlichtmodulators vorgebbar ist, dadurch zu realisieren, dass mehrere Teilbereiche des Phasenelements tatsächlich von der gewünschten Zielphase abweichen, wobei das nicht-monochromatische Lichtspektrum die Teilsegmente dadurch bestimmt, dass i) die Phasenverschiebungen der Teilbereiche nach dem vorhandenen Wellenlängenspektrum dimensioniert wird und gleichzeitig ii) die Flächenanteile der Teilbereiche derart gestaltet werden, dass die Phase der gewünschten Lichtverteilung durch das Flächenmittel der Phasen-Teilbereiche ausgebildet werden kann, vergleich hierzu auch [5].

Allgemein sei noch angemerkt, dass in den vorangegangenen Ausführungsbeispielen (implizit) gleich viele Bereiche zu einer Modulationszelle zusammengefasst angesehen werden. Selbstverständlich können auch unterschiedliche Anzahlen von Bereichen jeweils eine Modulationszelle bilden. Dies kann weitere Anforderungen, beispielsweise an den Tiefpassfilter, stellen, dies soll hier aber nicht weiter ausgeführt werden.

Die erfindungsgemäße Lösung ermöglicht also die Verwendung mehrerer Lichtwellenlängen oder die Verwendung monochromatischer, sequentiell oder räumlich parallel bei mehreren Wellenlängen und ggf. spektral breitbandige Quellen mit Filter zur Erzeugung eines komplexwertigen Lichtfeldes mit einem Aufbau. Dies stellt einen großen Vorteil der erfindungsgemäßen Lösung gegenüber dem Stand der Technik dar.

### Ausführungsbeispiel gemäß Fig. 7

Fig. 7 beschreibt ein Verfahren zum Betrieb 700 einer optischen Anordnung mit folgenden Merkmalen: Einem Einstellen 710 eines Flächenlichtmodulators, um Lichtintensitäten in zumindest zwei Strahlengängen, die durch Bereiche des Flächenlichtmodulators, die überlagert abgebildet werden, verlaufen, und in denen unterschiedlich starke Phasenmodulationen erfolgen, zu modulieren. In einem ersten Einstellungszustand liegt eine erste Verteilung der Lichtintensitäten in den zumindest zwei Strahlengängen vor und dadurch wird Licht einer ersten Phasenlage erzielt. In einem zweiten Einstellungszustand liegt eine zweite Verteilung der Lichtintensitäten in den zumindest zwei Strahlengängen vor, die sich von der ersten Verteilung der Lichtintensitäten unterscheidet, dadurch wird Licht in einer zweiten Phasenlage erzielt.

Fig. 7 beschreibt somit ein Verfahren zum Betrieb 700 einer optischen Anordnung. Durch diesen Betrieb 700 kann ein Summenlicht bzw. können Licht-Bildpunkte erzeugt werden. Ein einzelner Licht-Bildpunkt kann durch eine Überlagerung mehrerer Lichtbeiträge unterschiedlicher Phasenlage erzielt werden. Das Verfahren weist dabei ein Einstellen 710 eines Flächenlichtmodulators zur Erzeugung eines komplexwertigen Lichtfeldes mit einem Phasenmodulator auf. Zusätzlich ist die Phasenmodulation dabei ausgelegt, um die Phasen mehrerer Lichtbeiträge, die zu einem Licht-Bildpunkt überlagert abgebildet werden, so zu beeinflussen, dass die Vektoren oder die überlagerten Vektoren der Lichtbeiträge mit der geänderten Phase, beispielsweise in Verbindung mit der modulierten Amplitude der Lichtbeiträge, eine Fläche in der komplexen Ebene aufspannen, in der ein Vektor des Licht-Bildpunktes gewählt werden kann. Diese mehreren Lichtbeiträge sind dadurch charakterisiert, dass diese sich vor dem Bereich der Überlagerung (oder der überlagerten Abbildung) entlang getrennter Strahlengänge ausbreiten. Die überlagerten Vektoren können hierbei z. B. einen Summenvektor ergeben, somit wird die aufgespannte Fläche in der komplexen Ebene nicht nur von einzelnen Vektoren bestimmt, sondern kann auch durch eine sinnvolle Addition (Überlagerung) der Einzel-Vektoren erzielt werden. In Figen. 2 und 3 würde sich demnach Flächen in der komplexen Ebene ergeben, bei der dargestellten gleichen Amplitude aller Pixel und dem Phasenversatz von 90° der Pixel zueinander, die einem Quadrat entsprechen. Wobei der Mittelpunkt der Seiten des Quadrats jeweils von den Einzelvektoren erzeugt wird und wobei der Eckpunkt durch eine Überlagerung der vollen Beiträge von zwei benachbarten Vektoren erzielt wird.

Diese Vorgehensweise kann beispielsweise mithilfe der Vektoraddition der Amplituden und der Phasen des ersten und des zweiten Lichtbeitrags in der komplexen Ebene nachvollzogen und auch berechnet werden. Diese Vektoraddition kann beispielsweise analog zu den in den Figen. 2 und 3 dargestellten Vektoren und der Vektoraddition in Fig. 2 in der komplexen Ebene nachvollzogen werden. Als Merkmal kann hierbei angesehen werden, dass das Phasenelement vorteilhafterweise ausgelegt ist, um durch eine (Vektor-)Addition der einzelnen Lichtbeiträge einen sinnvollen Bereich der komplexen Ebene abzudecken. Selbstverständlich kann es hierbei auch erstrebenswert sein, nur Teilbereiche der komplexen Ebene zu überdecken, wobei somit die Bereiche des Phasenelements so ausgelegt sein können, dass beispielsweise nur Phasen eingestellt werden können, die beispielsweise in einem Quadranten der komplexen Ebene liegen. Auch Ausführungen die einen bestimmten (bspw. auch eingeschränkten) Winkelbereich der komplexen Ebene abdecken, wären mithilfe der erfindungsgemäßen Lösung realisierbar.

Somit stellt die erfindungsgemäße Lösung ein Verfahren zur Modulation von Licht in Amplitude und Phase unter Nutzung der nullten Beugungsordnung bereit. Die erfindungsgemäße Lösung lässt sich in Zusammenhang mit einer Vielzahl von Anwendungen verwenden, die Flächenlichtmodulatoren (engl.: "Spatial Light Modulators"), Diffraktive Optik (engl. "Diffractive Optics"), Komplexes Licht (engl. "Complex Light"), Digitale Holografie (engl. "Digital Holography") oder Phasenmodulation (engl. "Phase Modulation") einsetzen bzw. zum Ziel haben.

### Vorteile der erfindungsgemäßen Lösung im Vergleich zu bisherigen Lösungen

Bei der erfindungsgemäßen Lösung ist es möglich, auf schnelle, diskrete, hochauflösende Phasenmodulatoren zu verzichten, diese sind nur in sehr begrenztem Maß verfügbar, weiterhin sind die Anforderungen der Ausrichtung der optischen Komponenten in der erfindungsgemäßen Lösung relativ leicht erzielbar. Bei dem Stand der Technik kann festgestellt werden, dass bspw. die sequenzielle Abbildung auf zwei unterschiedliche SLMs [1] selten genutzt wird, weil dieser Aufbau eine sehr genaue Ausrichtung der optischen Komponenten erfordert. Hinzu kommen die begrenzte Verfügbarkeit schneller, diskreter, hochauflösender Phasenmodulatoren und die hohen Kosten, welche zurzeit mit dem Erwerb derartigen Bauteilen verbunden sind. Die begrenzte Verfügbarkeit geeigneter Phasenmodulatoren führt ebenfalls dazu, dass das Konzept von Florence, [4], in der Praxis kaum Anwendung findet.

In der Praxis findet man häufig Ansätze auf Basis der Lee-Holografie. Sowohl Lee als auch van Putten et al. nutzen die erste Beugungsordnung eines in den SLM programmierten periodischen Musters.

Gemäß der erfindungsgemäßen Lösung ist allerdings ein Minimum sogar von 2 Flächenlichtmodulator-Elementen (bspw. bei Verwendung einer Kippspiegel-Anordnung 2 Spiegel) möglich, und es lassen sich damit vernünftige Ergebnisse erzielen.

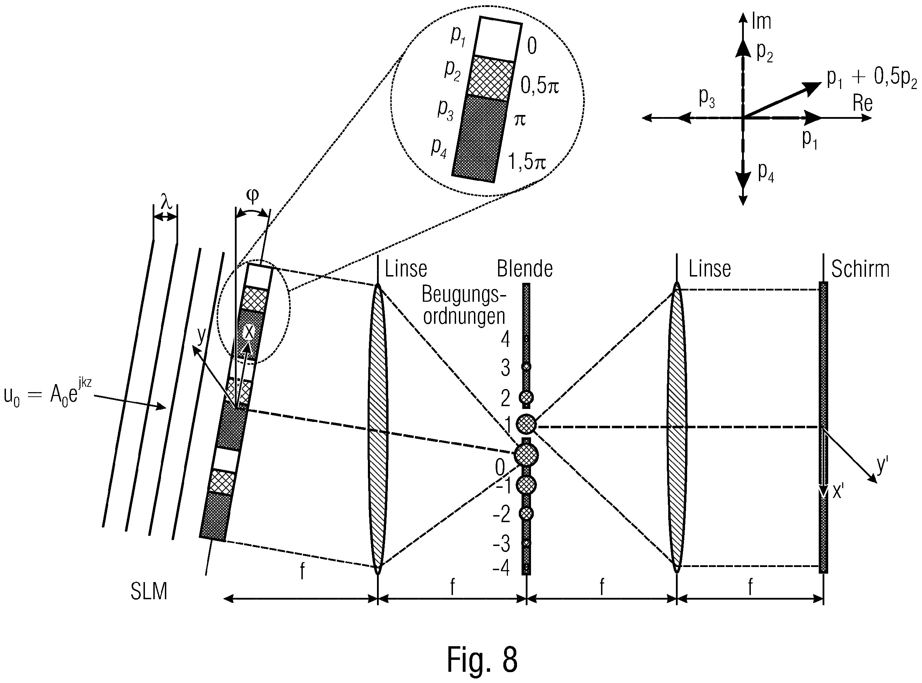

Weiterhin ist ein Vorteil, dass der Ort der, in der erfindungsgemäßen Lösung verwendeten, nullten Beugungsordnung keine Abhängigkeit von der Wellenlänge zeigt und somit nicht nur eine sondern mehrere Wellenlängen, bzw. Wellenlängenbereiche genutzt werden können. Das Konzept [3] eignet sich dahingegen ausschließlich für monochromatisches Licht und Einzelwellenlängen-Aufbauten. Beachtet man die spektralen Eigenschaften realer Lichtquellen ist bei diesem Verfahren inhärent mit wellenlängenabhängigen Abweichungen zur rechnen. Man spricht von chromatischen Aberrationen. Die Ursache liegt in der räumlichen Position der ersten Beugungsordnungen, welche ggf. linear von der Wellenlänge λ abhängen. Nur Licht in dieser Beugungsordnung propagiert zum Systemausgang. Dies führt zu einer Verdrehung (alternativ Verschiebung) der optischen Achse (siehe Fig. 8). Die benötigte Verdrehung/Verschiebung der optischen Achse ist zusätzlich linear von der Wellenlänge λ abhängig. Reale Systeme sind damit stark durch den sehr unflexiblen Systemaufbau limitiert.

Die erfindungsgemäße Lösung kann so ausgelegt sein, dass diese eine durchgängige optische Achse aufweist, optische Bauteile werden typischerweise bei der Herstellung entlang ihrer optischen Achse korrigiert. Eine Verdrehung der optischen Achse, wie in [3] benötigt, kann sich zusätzlich negativ auf die Abbildungsqualität optischer Aufbauten auswirken. Bzw. dadurch dass dies in der erfindungsgemäßen Lösung nicht erforderlich ist, kann die Abbildungsqualität durch Verwendung der erfindungsgemäßen Lösung gesteigert werden.

Ein weiterer Vorteil der erfindungsgemäßen Lösung ist, dass ein Standard SLM (räumlicher Lichtmodulator oder Flächenlichtmodulator) verwendet werden kann, es ist somit nicht nötig in den Herstellungsprozess der SLMs einzugreifen. Die technologische Umsetzung des Konzepts nach Sandström [5] kann zugleich als die aufwendige bekannte Lösung bezeichnet werden, weil in den schwierigen Herstellungsprozess des SLMs in der Mikrosystemtechnik erheblich eingegriffen werden muss. Es werden dazu neuartige, sog. "phase-step mirrors" (Phasensprung Spiegel) erzeugt. Es ist bisher kein vergleichbarer Modulator bekannt, bei dem dieser Ansatz auch herstellungstechnisch bereits gemeistert worden wäre, inklusive der zusätzlichen Phasenanpassungen. Abschließend ist anzumerken, dass die Vektor-Anpassung für komplexe Modulation fest in das Bauelement eingebracht wird, beispielsweise mittels eines Ätzprozesses. Die Parameter dieser Anpassung sind somit in dem Stand der Technik abhängig von der Wellenlänge. Optimale Funktionalität ist daher nur für eine einzelne Entwurfswellenlänge gegeben. Demgegenüber kann durch Verwendung der erfindungsgemäßen Lösung erzielt werden, dass eine komplexwertige Modulation auch mehrerer Lichtwellenlängen mit demselben Aufbau erfolgen kann.

### Weitere Aspekte

Im Folgenden werden einige allgemeine Ideen und Aspekte der Erfindung erläutert.

Ein Ausführungsbeispiel der Erfindung schafft eine optische Anordnung und ein Verfahren zur Erzeugung von Lichtfeldverteilungen, die räumlich und ggf. zeitlich mit variierender Amplitude und Phase einstellbar sind.

Optische Anordnung zur Erzeugung einer variablen Lichtfeldverteilung umfasst eine Kombination eines Flächenlichtmodulators mit einem Phasenelement innerhalb eines optischen Aufbaus mit Fourierfilter und elektronischer Steuereinheit. Die Vorrichtung ist ausgelegt, um ein programmierbares Lichtfeld zu erzeugen, das räumlich und ggf. zeitlich mit variierender Amplitude und Phase einstellbar ist.

Ein Aspekt der Erfindung betrifft ein Verfahren zum Betrieb eines Flächenlichtmodulators in o.g. optischer Vorrichtung zur Erzeugung eines komplexwertigen Lichtfeldes. Das Verfahren beinhaltet eine definierte Anpassung eines Phasenmodulators (oder Phasenelements) und Tiefpassfilters an einen Flächenlichtmodulator, sowie die Adressierung des Flächenlichtmodulators mit Zellgebieten, deren effektiver Feldstärken-Mittelwert die Darstellung variabler Lichtfeldverteilungen bestimmt.

Ein Aspekt der Erfindung betrifft eine optische Anordnung zur Erzeugung von Lichtfeldverteilungen, die räumlich und ggf. zeitlich mit variierender Amplitude und Phase einstellbar sind. Die Anordnung weist eine Kombination aus programmierbarem Flächenlichtmodulator "SLM" (1) (entweder als reiner Phasenmodulator oder als kombinierter Amplituden-Phasen-Modulator), mit einem Phasenelement (2), einem optisches Tiefpassfilter (3), einer (optionalen) Beleuchtungseinheit (4) und einer (optionalen) Steuerungseinrichtung (5) auf.

Die optische Anordnung ist zusätzlich beispielsweise dadurch gekennzeichnet, dass
- mindestens eine Maskenebene (E), eine Pupillenebene (P) und eine Bildebene(E') und ggf. weitere, zu den vorhergehenden konjugierte, optische Ebenen (E', P'), durch eine Kombination von Linsen oder Spiegeln bereitgestellt werden, und/oder
- der Flächenlichtmodulator (1) und das Phasenelement (2) in der gleichen oder konjugierten optischen Maskenebene (E/E') mit Licht (5) der Beleuchtungseinheit (4) bestrahlt werden, und/oder
- ein Abbildungsweg realisiert wird, der die nullte Beugungsordnung der Pupillenebene auf der optischen Hauptachse angeordnet, und/oder
- das Tiefpassfilter (3) in einer Pupillenebene P/P' den Bereich der nullten Beugungsordnung eingrenzt, und/oder
- die Steuerungseinrichtung (5) den Lichtmodulator (1), und ggf. die Beleuchtungseinheit (4) bzw. das Phasenelement (2) und/oder den Tiefpassfilter (3) adressiert.

Optional kann beispielsweise eine spektrale Variation der Lichtquelle erfolgen.

Ein weiterer Aspekt gemäß der Erfindung schafft ein Verfahren zur Erzeugung von Lichtfeldverteilungen, die räumlich mit variierender Amplitude und Phase einstellbar sind, beispielsweise in der vorstehend beschriebenen Anordnung. Das Verfahren ist beispielsweise dadurch gekennzeichnet, dass
- jeder Punkt des gewünschten Lichtfeldes durch eine Gruppe von mindestens 2 Pixeln, d.h. durch eine sog. "Modulatorzelle" des Flächenlichtmodulators (1), in der Maskenebene angesteuert wird: und/oder
- ein optisches Tiefpassfilter (3) zur Begrenzung der Beugungsintensität in einer Pupillenebene P/P' eingesetzt wird und derart dimensioniert ist, dass zwei oder mehr, benachbarte Pixel des Flächenlichtmodulators (1) zu einem effektiven Bildpunkt in der Bildebene überlagert werden, und/oder
- auf dem Phasenmodulator (oder auf dem Phasenelement) (2) mindestens zwei Phasenstufen räumlich verteilt derart ausgestaltet sind, sodass Pixel einer "Modulatorzelle" die komplexe Feldstärkeebene in 4 Quadranten für jeden Punkt des gewünschten Lichtfeldes erzeugen.

Ein oder mehrere der folgenden Aspekte können zudem verwirklicht sein:
- Variation Zellgröße und -geometrie ab 2x2 bzw. 2x1,
- Variation/Anpassung Tiefpassfilter nach Geometrie und Wellenlänge
- Variation Phasenmodulator (oder Phasenelement) nach Wellenlänge und Zielverteilung
- Variation der Quelle

Gemäß einem weiteren Erfindungsaspekt erfolgt anstatt der Einstellung der Phase (beispielsweise durch das Phasenelement) oder zusätzlich zu der Einstellung der Phase eine Einstellung einer Polarisation (beispielsweise durch ein Polarisationselement). Somit können beispielsweise Amplitude, Phase und Polarisation eingestellt werden. Zusätzlich zu den für die Einstellung von Amplitude und Phase verwendeten Elementen kann hierbei ein Polarisationselement verwendet werden. Für das hier beschriebene Konzept sind pixelierte Polarisationselemente am besten geeignet, die typischerweise nicht örtlich gleichverteilt sind. Das sind spezielle Bauteile, die von einigen Herstellern, beispielsweise als Spezialanfertigung, angeboten werden. Der pixelierte Charakter der Polarisationselemente bietet deutliche Vorteile bei der Realisierung.

### Referenzen

[1] R. D. Juday, "Full complex modulation using two one-parameter spatial light modulators," US Patent 5,416,618, May-1995.
[2] W. H. Lee, "Sampled Fourier transform hologram generated by computer," Appl. Opt., vol. 9, no. 3, pp. 639-643, 1970.
[3] E. G. van Putten, I. M. Vellekoop, and A. P. Mosk, "Spatial amplitude and phase modulation using commercial twisted nematic LCDs," Appl Opt, vol. 47, no. 12, 2008.
[4] J. M. Florence, "Spatial light modulator with full complex light modulation capability," US Patent 5,148,157, Sep-1992.
[5] T. Sandström, "Spatial light modulator with structured mirror surfaces," WO002009130603A2.
[6] T. R. Hillman, T. Yamauchi, W. Choi, R. R. Dasari, M. S. Feld, Y. Park, and Z. Yaqoob, "Digital optical phase conjugation for delivering two-dimensional images through turbid media," Sci. Rep., vol. 3, May 2013.
[7] I. M. Vellekoop, "Feedback-based wavefront shaping," Opt. Express, vol. 23, no. 9, p. 12189, May 2015.
[8] S. N. Chandrasekaran, H. Ligtenberg, W. Steenbergen, and I. M. Vellekoop, "Using digital micromirror devices for focusing light through turbid media," 2014, p. 897905.
[9] T.-C. Poon and J.-P. Liu, Introduction to modern digital holography: with MATLAB, Repr. with corrections. Cambridge: Cambridge University Press, 2014.
[10] James M. Florence, Richard D. Juday, "Full Complex Spatial Filtering with a Phase Mostly DMD", SPIE Wave Propagation and Scattering in Varied Media II, Vol. 1558, 1991.

## Patentansprüche

1. Optische Anordnung (100; 200; 300; 400) zur Erzeugung von Lichtfeldverteilungen, die mit variierender Amplitude und Phase einstellbar sind, mit folgenden Merkmalen:
einem programmierbaren Flächenlichtmodulator (110; 210; 310; 410);
einem Phasenelement (120; 220; 320; 420); und
einem optischen System (130; 230; 330; 430);
wobei das Phasenelement ausgelegt ist, um mindestens zwei oder mehr Phasenbeiträge auf benachbarten Modulator-Bildpunkten zu bewirken,
wobei das optische System (130; 230; 330; 430) ausgelegt ist, um mehrere Bereiche (110a; 110b; 110c; 210a; 210b; 210c; 210d; 310a; 310b) des Flächenlichtmodulators (110; 210; 310; 410) überlagert abzubilden;
wobei der Flächenlichtmodulator und das Phasenelement innerhalb einer Schärfentiefe einer Ebene, oder konjugierter optischer Maskenebenen angeordnet sind, und
wobei der Flächenlichtmodulator als Phasenmodulator oder als kombinierter Amplituden- und Phasenmodulator ausgelegt ist, und
wobei die optische Anordnung ausgelegt ist, um in einer folgenden Bildebene eine vorgebbare komplexe Lichtfeldverteilung zu erreichen;
wobei die optische Anordnung ein optisches Tiefpassfilter zur Begrenzung einer Beugungsintensität in einer Pupillenebene aufweist, das derart dimensioniert ist, dass zwei oder mehr benachbarte Bildpunkte (Pixel) des Flächenlichtmodulators zu einem effektiven Bildpunkt in der Bildebene überlagert werden.

2. Optische Anordnung (100; 200; 300; 400) gemäß Anspruch 1, wobei das Phasenelement (120; 220; 320; 420) ausgelegt ist, eine zeitveränderliche Beeinflussung der Phase zu ermöglichen.

3. Optische Anordnung (100; 200; 300; 400) gemäß Anspruch 2, wobei das Phasenelement (120; 220; 320; 420) programmierbar ist.

4. Optische Anordnung (100; 200; 300; 400) gemäß einem der Ansprüche 2 oder 3, wobei das Phasenelement (120; 220; 320; 420) ein Flüssigkristallphasenmodulator ist.

5. Optische Anordnung (100; 200; 300; 400) gemäß einem der Ansprüche 2 bis 4, wobei eine Änderung der Einstellung der Phase bzw. der Phase und Amplitude durch den Flächenlichtmodulator (110; 210; 310; 410) um mindestens einen Faktor 2 schneller ist als eine Änderung der Beeinflussung der Phase durch das Phasenelement (120; 220; 320; 420).

6. Optische Anordnung (100; 200; 300; 400) gemäß einem der Ansprüche 1 bis 5, wobei mindestens ein Bereich des Flächenlichtmodulators (110; 210; 310; 410) einen ausgezeichneten Strahlengang aufweist, wobei der ausgezeichnete Strahlengang ausgelegt ist, um zu einer Überlagerung beizutragen; und
wobei in dem ausgezeichneten Strahlengang zwischen dem Flächenlichtmodulator (110; 210; 310; 410) und dem Bereich der Überlagerung das Phasenelement (120; 220; 320; 420) vorgesehen ist; und
wobei das Phasenelement (120; 220; 320; 420) so ausgelegt ist, dass die Phase des ausgezeichneten Strahlengangs in dem Bereich der Überlagerung eine bestimmte Phase aufweist.

7. Optische Anordnung (100; 200; 300; 400) gemäß einem der Ansprüche 1 bis 6, wobei mehrere Bereiche (311a,311b) des Flächenlichtmodulators (110; 210; 310; 410) ausgelegt ist, um mehrere unterschiedliche, ausgezeichnete Strahlengänge zu modulieren, wobei die Strahlengänge jeweils ausgelegt sind, um zu einer Überlagerung beizutragen; und
wobei das Phasenelement (120; 220; 320; 420) ausgelegt ist, um die Phasen der Lichtbeiträge, die sich entlang der mehreren unterschiedlichen, ausgezeichneten Strahlengängen ausbreiten, unterschiedlich stark zu verändern.

8. Optische Anordnung (100; 200; 300; 400) gemäß einem der Ansprüche 1 bis 7, wobei zwei Bereiche (311a,311b) des Flächenlichtmodulators (110; 210; 310; 410) ausgelegt sind, um zwei unterschiedliche, ausgezeichnete Strahlengänge zu modulieren, wobei die Strahlengänge (141; 143) jeweils ausgelegt sind, um zu einer Überlagerung beizutragen; und
wobei das Phasenelement (120; 220; 320; 420) ausgelegt ist, um eine Differenz der Phasenänderungen der Lichtbeiträge, die sich entlang der zwei unterschiedlichen, ausgezeichneten Strahlengänge ausbreiten, von 90°±10° einzustellen.

9. Optische Anordnung (100; 200; 300; 400) gemäß einem der Ansprüche 1 bis 8, wobei ein Bereich (311a) des Flächenlichtmodulators (110; 210; 310; 410), der ausgelegt ist, um einheitlich angesteuert zu werden, mehreren Bereichen (320a,320b) des Phasenelements (120; 220; 320; 420) zugeordnet ist.

10. Optische Anordnung (100; 200; 300; 400) gemäß einem der Ansprüche 1 bis 9, wobei zumindest vier Bereiche (320a,320b,320c,320d) des Phasenelements (120; 220; 320; 420) mit unterschiedlicher Phasenbeeinflussung mit zwei Bereichen (311a,311b) des Flächenlichtmodulators (110; 210; 310; 410) die komplexe Modulationszelle bilden.

11. Optische Anordnung (100; 200; 300; 400) gemäß einem der Ansprüche 1 bis 10, wobei zumindest zwei Bereiche (320a,320b,320c,320d) des Phasenelements (120; 220; 320; 420) mit unterschiedlicher Phasenbeeinflussung mit einem Bereich (311a oder 311b) des Flächenlichtmodulators (110; 210; 310; 410) eine Modulationszelle zur Bereitstellung positiver und negativer Amplituden an einem Systemausgang bilden.

12. Optische Anordnung (100; 200; 300; 400) gemäß einem der Ansprüche 1 bis 11, wobei mehrere Bereiche des Phasenelements (120; 220; 320; 420), die mit mehreren Bereichen des Flächenlichtmodulators (110; 210; 310; 410) eine komplexe Modulationszelle bilden, mindestens drei Bereiche mit unterschiedlicher Phasenbeeinflussung aufweisen; und
wobei eine Differenz zwischen einem Winkel einer ersten Phasenbeeinflussung und einem Winkel einer zweiten Phasenbeeinflussung zwischen 5 und 60 Grad, oder zwischen 60 Grad und 150 Grad oder zwischen 80 Grad und 100 Grad oder zwischen 85 Grad und 95 Grad oder zwischen 110 Grad und 130 Grad oder zwischen 115 Grad und 125 ° beträgt; und
wobei das optische System (130; 230; 330; 430) ausgelegt ist, um eine Überlagerung der zu der komplexen Modulationszelle gehörenden Strahlengänge (141; 143) zu ermöglichen.

13. Optische Anordnung gemäß einem der Ansprüche 1 bis 12, wobei die optische Anordnung ausgelegt ist, um ein optisches Tiefpassfilter, das ausgelegt ist, um eine überlagerte Abbildung mehrerer Bereiche (110a; 110b; 110c; 210a; 210b; 210c; 210d; 310a; 310b)des Flächenlichtmodulators (110; 210; 310; 410) zu ermöglichen, abhängig von einer Lichtwellenlänge anzupassen.

14. Optische Anordnung gemäß einem der Ansprüche 1 bis 13, wobei die optische Anordnung mindestens einen Kippspiegel (311a) aufweist, wobei das Phasenelement derart angeordnet ist, dass zwei Bereiche des Kippspiegels, die sich aufgrund einer mechanischen Verkoppelung bei einer Auslenkung des Kippspiegels im Hinblick auf eine optische Achse in entgegengesetzte Richtungen (315a,316a) bewegen, zwei Bereichen (320a,320b) des Phasenelements, die unterschiedliche Phasenbeiträge liefern, zugeordnet sind.

15. Optische Anordnung gemäß Anspruch 14, wobei mindestens ein Kippspiegel ausgelegt ist, um einen in einer Richtung (x) senkrecht zu der optischen Achse variablen Phasenbeitrag (382a,382b,382c) zu erzeugen,
wobei das Phasenelement ausgelegt ist, um in einem ersten Bereich des Kippspiegels einen ersten Phasenbeitrag (372a) zu liefern, und um in einem zweiten Bereich des Kippspiegels einen zweiten Phasenbeitrag (372b) zu liefern,
wobei der Phasenbeitrag (382a,382b,382c) des Kippspiegels über den ersten und den zweiten Bereich hinweg örtlich stetig oder örtlich linear veränderlich ist.

16. Optische Anordnung gemäß Anspruch 14 oder 15, wobei das Phasenelement ausgelegt ist, um unter Verwendung eines Kippspiegels (311a), der einen örtlich stetigen, von einer Auslenkung des Kippspiegels anhängigen Phasenbeitrag (382a,382b,382c) liefert, einen nicht-stetigen Phasenverlauf (398a,398b,398c) zu erhalten.

17. Optische Anordnung gemäß einem der Ansprüche 14 bis 16, wobei das Phasenelement derart angeordnet ist, dass zwei Bereichen eines Kippspiegels, die einen örtlich stetigen, von einer Auslenkung des Kippspiegels anhängigen Phasenbeitrag (382a,382b,382c) liefern, durch das Phasenelement ein Phasensprung von zumindest 90 Grad zugeordnet wird.

18. Optische Anordnung (100; 200; 300; 400) zur Erzeugung von Lichtfeldverteilungen, die mit variierender Amplitude und Polarisation einstellbar sind , mit folgenden Merkmalen:
einem programmierbaren Flächenlichtmodulator (110; 210; 310; 410);
einem Polarisationselement (120; 220; 320; 420);
und
einem optischen System (130; 230; 330; 430);
wobei das Polarisationselement ausgelegt ist, um mindestens zwei oder mehr Polarisationsbeiträge auf benachbarten Modulatorpixeln zu bewirken oder mindestens zwei verschiedene Polarisationsfilter auf benachbarte Modulatorpixel anzuwenden, wobei das optische System (130; 230; 330; 430) ausgelegt ist, um mehrere Bereiche (110a; 110b; 110c; 210a; 210b; 210c; 210d; 310a; 310b) des Flächenlichtmodulators (110; 210; 310; 410) überlagert abzubilden;
wobei der Flächenlichtmodulator und das Polarisationselement innerhalb einer Schärfentiefe einer Ebene, oder konjugierter optischer Maskenebenen angeordnet sind, und
wobei die optische Anordnung ausgelegt ist, um in einer folgenden Bildebene einen Lichtwert mit vorgebbarer Amplitude und vorgebbarer Polarisation zu erreichen
wobei die optische Anordnung ein optisches Tiefpassfilter zur Begrenzung einer Beugungsintensität in einer Pupillenebene aufweist, das derart dimensioniert ist, dass zwei oder mehr benachbarte Bildpunkte (Pixel) des Flächenlichtmodulators zu einem effektiven Bildpunkt in der Bildebene überlagert werden.

19. Optische Anordnung gemäß Anspruch 18, wobei die optische Anordnung ferner ein Phasenelement (120; 220; 320; 420) aufweist, das ausgelegt ist, um mindestens zwei oder mehr Phasenbeiträge auf benachbarten Modulator-Bildpunkten zu bewirken.

## Claims

1. Optical arrangement (100; 200; 300; 400) for generating light field distributions that can be adjusted with varying amplitude and phase, comprising:
a programmable spatial light modulator (110; 210; 310; 410);
a phase element (120; 220; 320; 420) and
an optical system (130; 230; 330; 430);
wherein the phase element is configured to effect at least two or more phase contributions on adjacent modulator image points;
wherein the optical system (130; 230; 330; 430) is configured to image several areas (110a; 110b; 110c; 210a; 210b; 210c; 210d; 310a; 310b) of the spatial light modulator (110; 210; 310; 410) in a superimposed manner;
wherein the spatial light modulator and the phase element are arranged within a depth of field of a plane or conjugated optical mask planes, and
wherein the spatial light modulator is configured as phase modulator or as combined amplitude and phase modulator and
wherein the optical arrangement is configured to realize a predeterminable complex light field distribution in a subsequent image plane;
wherein the optical arrangement comprises an optical low-pass filter for limiting a diffraction intensity in a pupil plane, which is dimensioned in such a way that two or more adjacent image points (pixels) of the spatial light modulator are superimposed to form an effective image point in the image plane.

2. Optical arrangement (100; 200; 300; 400) according to claim 1, wherein the phase element (120; 220; 320; 420) is configured to allow a time-variant influence of the phase.

3. Optical arrangement (100; 200; 300; 400) according to claim 2, wherein the phase element (120; 220; 320; 420) is programmable.

4. Optical arrangement (100; 200; 300; 400) according to one of claims 2 or 3, wherein the phase element (120; 220; 320; 420) is a liquid-crystal phase modulator.

5. Optical arrangement (100; 200; 300; 400) according to one of claims 2 to 4, wherein a change of the adjustment of the phase or the phase and amplitude by the spatial light modulator (110; 210; 310; 410) is by at least a factor of 2 faster than a change of the influence of the phase by the phase element (120; 220; 320; 420).

6. Optical arrangement (100; 200; 300; 400) according to one of claims 1 to 5, wherein at least one area of the spatial light modulator (110; 210; 310; 410) comprises a distinguished optical path, wherein the distinguished optical path is configured to contribute to a superposition; and
wherein the phase element (120; 220; 320; 420) is provided in the distinguished optical path between the spatial light modulators (110; 210; 310; 410) and the area of superposition; and
wherein the phase element (120; 220; 320; 420) is configured such that the phase of the distinguished optical path has a specific phase in the area of the superposition.

7. Optical arrangement (100; 200; 300; 400) according to one of claims 1 to 6, wherein several areas (311a, 311b) of the spatial light modulator (110; 210; 310; 410) are configured to modulate several different distinguished optical paths, wherein the optical paths are each configured to contribute to a superposition; and
wherein the phase element (120; 220; 320; 420) is configured to vary the phases of the light contribution that propagate along several different distinguished optical paths to a different extent.

8. Optical arrangement (100; 200; 300; 400) according to one of claims 1 to 7, wherein two areas (311a, 311b) of the spatial light modulator (110; 210; 310; 410) are configured to modulate two different distinguished optical paths, wherein the optical paths (141; 143) are each configured to contribute to a superposition; and
wherein the phase element (120; 220; 320; 420) is configured to adjust a difference of the phase changes of the light contributions that propagate along the two different distinguished optical paths from 90°±10°.

9. Optical arrangement (100; 200; 300; 400) according to one of claims 1 to 8, wherein an area (311a) of the spatial light modulator (110; 210; 310; 410) that is configured to be uniformly controlled is allocated to several areas (320a, 320b) of the phase element (120; 220; 320; 420).

10. Optical arrangement (100; 200; 300; 400) according to one of claims 1 to 9, wherein at least four areas (320a, 320b, 320c, 320d) of the phase element (120; 220; 320; 420) with different phase influence form the complex modulation cell with two areas (311a, 311b) of the spatial light modulator (110; 210; 310; 410).

11. Optical arrangement (100; 200; 300; 400) according to one of claims 1 to 10, wherein at least two areas (320a, 320b, 320c, 320d) of the phase element (120; 220; 320; 420) with different phase influence form a modulation cell for providing positive and negative amplitudes at a system output with an area (311a or 311b) of the spatial light modulator (110; 210; 310; 410).

12. Optical arrangement (100; 200; 300; 400) according to one of claims 1 to 11, wherein several areas of the phase element (120; 220; 320; 420) that form a complex modulation cell with several areas of the spatial light modulator (110; 210; 310; 410) comprise at least three areas with different phase influence; and
wherein a difference between an angle of a first phase influence and an angle of a second phase influence is between 5 and 60 degrees or between 60 degrees and 150 degrees or between 80 degrees and 100 degrees or between 85 degrees and 95 degrees or between 110 degrees and 130 degrees or between 115 degrees and 125 degrees; and
wherein the optical system (130; 230; 330; 430) is configured to allow a superposition of the optical paths (141; 143) belonging to the complex modulation cell.

13. Optical arrangement according to one of claims 1 to 12, wherein the optical arrangement is configured to adapt an optical low-pass filter, which is configured to allow superimposed imaging of several areas (110a; 110b; 110c; 210a; 210b; 210c; 210d; 310a; 310b) of the spatial light modulator (110; 210; 310; 410), in dependence on a light wavelength.

14. Optical arrangement according to one of claims 1 to 13, wherein the optical arrangement comprises at least one tilting mirror (311a), wherein the phase element is arranged such that two areas of the tilting mirror that move in opposite directions (315a, 316a) with respect to an optical axis due to mechanical coupling during deflection of the tilting mirror are allocated to two areas (320a, 320b) providing different phase contributions.

15. Optical arrangement according to claim 14, wherein at least one tilting mirror is configured to generate a phase contribution (382a, 382b, 382c) that is variable in a direction (x) perpendicular to the optical axis,
wherein the phase element is configured to provide a first phase contribution (372a) in a first area of the tilting mirror and to provide a second phase contribution (372b) in a second area of the tilting mirror,
wherein the phase contribution (382a, 382b, 382c) of the tilting mirror is either locally continuous or locally variable in a linear manner across the first and the second area.

16. Optical arrangement according to claim 14 or 15, wherein the phase element is configured to obtain a non-continuous phase curve (398a, 398b, 398c) by using a tilting mirror (311a) providing a locally constant phase contribution (382a, 382b, 382c) that depends on a deflection of the tilting mirror.

17. Optical arrangement according to one of claims 14 to 16,
wherein the phase element is arranged such that a phase jump of at least 90 degrees is allocated, by the phase element, to two areas of a tilting mirror providing a locally constant phase contribution (382a, 382b, 382c) that depends on a deflection of the tilting mirror.

18. Optical arrangement (100; 200; 300; 400) for generating light field distributions that can be adjusted with varying amplitude and polarization, comprising:
a programmable spatial light modulator (110; 210; 310; 410);
a polarization element (120; 220; 320; 420); and
an optical system (130; 230; 330; 430);
wherein the polarization element is configured to effect at least two or more polarization contributions on adjacent modulator pixels or to apply at least two different polarization filters to adjacent modulator pixels,
wherein the optical system (130; 230; 330; 430) is configured to image several areas (110a; 110b; 110c; 210a; 210b; 210c; 210d; 310a; 310b) of the spatial light modulator (110; 210; 310; 410) in a superimposed manner;
wherein the spatial light modulator and the polarization element are arranged within a depth of field of a plane or conjugated optical mask planes and
wherein the optical arrangement is configured to realize a light value with predeterminable amplitude and predeterminable polarization in a subsequent image plane,
wherein the optical arrangement comprises an optical low-pass filter for limiting a diffraction intensity in a pupil plane, which is dimensioned in such a way that two or more adjacent image points (pixels) of the spatial light modulator are superimposed to form an effective image point in the image plane.

19. Optical arrangement according to claim 18, wherein the optical arrangement further comprises a phase element (120; 220; 320; 420) that is configured to effect at least two or more phase contributions on adjacent modulator image points.

## Revendications

1. Aménagement optique (100; 200; 300; 400) permettant de générer des répartitions de champ de lumière qui peuvent être réglées avec une amplitude et une phase variables, aux caractéristiques suivantes:
un modulateur de lumière de surface programmable (110; 210; 310; 410);
un élément de phase (120; 220; 320; 420); et
un système optique (130; 230; 330; 430);
dans lequel l'élément de phase est conçu pour provoquer au moins deux contributions de phase ou plus sur des pixels de modulateur adjacents,
dans lequel le système optique (130; 230; 330; 430) est conçu pour reproduire de manière superposée plusieurs zones (110a; 110b; 110c; 210a; 210b; 210c; 210d; 310a; 310b) du modulateur de lumière de surface (110; 210; 310; 410),
dans lequel le modulateur de lumière de surface et l'élément de phase sont disposés dans une profondeur de champ d'un plan ou de plans de masque optique conjugués, et
dans lequel le modulateur de lumière de surface est conçu comme modulateur de phase ou comme modulateur combiné d'amplitude et de phase, et
dans lequel l'aménagement optique est conçu pour atteindre une répartition de champ de lumière complexe prédéterminée dans un plan d'image suivant;
dans lequel l'aménagement optique présente un filtre passe-bas optique destiné à limiter une intensité de diffraction dans un plan de pupille qui est dimensionné de sorte que deux pixels adjacents ou plus du modulateur de lumière de surface soient superposés pour obtenir un pixel effectif dans le plan d'image.

2. Aménagement optique selon la revendication 1, dans lequel l'élément de phase (120; 220; 320; 420) est conçu pour permettre une influence variable dans le temps sur la phase.

3. Aménagement optique (100; 200; 300; 400) selon la revendication 2, dans lequel l'élément de phase (120; 220; 320; 420) est programmable.

4. Aménagement optique (100; 200; 300; 400) selon la revendication 2 ou 3, dans lequel l'élément de phase (120; 220; 320; 420) est un modulateur de phase à cristaux liquides.

5. Aménagement optique (100; 200; 300; 400) selon l'une des revendications 2 à 4, dans lequel une modification du réglage de la phase ou de la phase et de l'amplitude par le modulateur de lumière de surface (110; 210; 310; 410) d'au moins un facteur de 2 est plus rapide qu'une modification de l'influence de la phase par l'élément de phase (120; 220; 320; 420).

6. Aménagement optique (100; 200; 300; 400) selon l'une des revendications 1 à 5, dans lequel au moins une zone du modulateur de lumière de surface (110; 210; 310; 410) présente un excellent trajet de faisceau, dans lequel l'excellent trajet de faisceau est conçu pour contribuer à une superposition; et
dans lequel est prévu, dans l'excellent trajet de faisceau, entre le modulateur de lumière de surface (110; 210; 310; 410) et la zone de superposition, l'élément de phase (120; 220; 320; 420);
dans lequel l'élément de phase (120; 220; 320; 420) est conçu de sorte que la phase de trajet de l'excellent trajet de faisceau dans la zone de superposition présente une phase déterminée.

7. Aménagement optique (100; 200; 300; 400) selon l'une des revendications 1 à 6, dans lequel plusieurs zones (311a, 311b) du modulateur de lumière de surface (110; 210; 310; 410) sont conçues pour moduler plusieurs excellents trajets de faisceau différents, dans lequel les trajets de faisceau sont conçus, chacun, pour contribuer à une superposition; et
dans lequel l'élément de phase (120; 220; 320; 420) est conçu pour modifier de manière différemment forte les phases des contributions de lumière qui se propagent le long des plusieurs excellents trajets de faisceaux différents.

8. Aménagement optique (100; 200; 300; 400) selon l'une des revendications 1 à 7, dans lequel deux zones (311a, 311b) du modulateur de lumière de surface (110; 210; 310; 410) sont conçues pour moduler deux excellents trajets de faisceaux différents, dans lequel les trajets de faisceaux (141; 143) sont conçus, chacun, pour contribuer à une superposition; et
dans lequel l'élément de phase (120; 220; 320; 420) est conçu pour régler une différence des modifications de phase des contributions de lumière qui se propagent le long des deux excellents trajets de faisceaux différents de 90° ± 10°.

9. Aménagement optique (100; 200; 300; 400) selon l'une des revendications 1 à 8, dans lequel une zone (311a) du modulateur de lumière de surface (110; 210; 310; 410), qui est conçue pour être commandée de manière unitaire, est associée à plusieurs zones (320a, 320b) de l'élément de phase (120; 220; 320; 420).

10. Aménagement optique (100; 200; 300; 400) selon l'une des revendications 1 à 9, dans lequel au moins quatre zones (320a, 320b, 320c, 320d) de l'élément de phase (120; 220; 320; 420) avec des influences de phase différentes forment, avec deux zones (311a, 311b) du modulateur de lumière de surface (110; 210; 310; 410), la cellule de modulation complexe.

11. Aménagement optique (100; 200; 300; 400) selon l'une des revendications 1 à 10, dans lequel au moins deux zones (320a, 320b, 320c, 320d) de l'élément de phase (120; 220; 320; 420) avec des influences de phase différentes forment, avec une zone (311a ou 311b) du modulateur de lumière de surface (110; 210; 310; 410), une cellule de modulation destinée à mettre à disposition des amplitudes positives et négatives à une sortie du système.

12. Aménagement optique (100; 200; 300; 400) selon l'une des revendications 1 à 11, dans lequel plusieurs zones de l'élément de phase (120; 220; 320; 420) qui forment, avec plusieurs zones du modulateur de lumière de surface (110; 210; 310; 410), une cellule de modulation complexe présentent au moins trois zones avec des influences de phase différentes; et
dans lequel une différence entre un angle d'une première influence de phase et un angle d'une deuxième influence de phase est comprise entre 5 et 60 degrés, ou entre 60 degrés et 150 degrés ou entre 80 degrés et 100 degrés ou entre 85 degrés et 95 degrés ou entre 110 degrés et 130 degrés ou entre 115 degrés et 125 degrés; et
dans lequel l'aménagement optique (130; 230; 330; 430) est conçu pour permettre une superposition des trajets de faisceaux (141; 143) appartenant à la cellule de modulation complexe.

13. Aménagement optique (100; 200; 300; 400) selon l'une des revendications 1 à 12, dans lequel l'aménagement optique est conçu pour adapter un filtre passe-bas optique qui est conçu pour permettre une reproduction superposée de plusieurs zones (110a; 110b; 110c; 210a; 210b; 210c; 210d; 310a; 310b) de la zone du modulateur de lumière de surface (110; 210; 310; 410) en fonction d'une longueur d'onde de lumière.

14. Aménagement optique (100; 200; 300; 400) selon l'une des revendications 1 à 13, dans lequel l'aménagement optique présente au moins un miroir inclinable (311a), dans lequel l'élément de phase est disposé de sorte que deux zones du miroir inclinable, qui se déplacent, par suite d'un doublement mécanique lors d'une déviation du miroir inclinable par rapport à un axe optique, dans des directions opposées (315a, 316a), soient associées à deux zones (320a, 320b) de l'élément de phase, qui fournissent des contributions de phase différentes.

15. Aménagement optique (100; 200; 300; 400) selon la revendication 14, dans lequel au moins un miroir inclinable est conçu pour générer une contribution de phase (382a, 382b, 382c) variable dans une direction (x) perpendiculaire à l'axe optique,
dans lequel l'élément de phase est conçu pour fournir, dans une première zone du miroir inclinable, une première contribution de phase (372a) et pour fournir, dans une deuxième zone du miroir inclinable, une deuxième contribution de phase (372b),
dans lequel la contribution de phase (382a, 382b, 382c) du miroir inclinable est localement constante ou localement variable linéairement au-delà des la première et de la deuxième zone.

16. Aménagement optique (100; 200; 300; 400) selon la revendication 14 ou 15, dans lequel l'élément de phase est conçu pour obtenir, à l'aide d'un miroir inclinable (311a) qui fournit une contribution de phase (382a, 382b, 382c) localement constante et qui dépend d'une déviation du miroir inclinable, une évolution de phase non constante (398a, 398b, 398c).

17. Aménagement optique (100; 200; 300; 400) selon l'une des revendications 14 à 16, dans lequel l'élément de phase est disposé de sorte qu'à deux zones d'un miroir inclinable, qui fournissent une contribution de phase (382a, 382b, 382c) localement constante et qui dépend d'une déviation du miroir inclinable, soit associé un saut de phase d'au moins 90 degrés par l'élément de phase.

18. Aménagement optique (100; 200; 300; 400) permettant de générer des répartitions de champ de lumière qui peuvent être réglées avec une amplitude et une polarisation variables, aux caractéristiques suivantes:
un modulateur de lumière de surface programmable (110; 210; 310; 410);
un élément de polarisation (120; 220; 320; 420); et
un système optique (130; 230; 330; 430);
dans lequel l'élément de polarisation est conçu pour provoquer au moins deux contributions de polarisation ou plus sur des pixels de modulateur adjacents ou pour appliquer au moins deux filtres de polarisation différents sur des pixels de modulateur adjacents,
dans lequel le système optique (130; 230; 330; 430) est conçu pour reproduire de manière superposée plusieurs zones (110a; 110b; 110c; 210a; 210b; 210c; 210d; 310a; 310b) du modulateur de lumière de surface (110; 210; 310; 410),
dans lequel le modulateur de lumière de surface et l'élément de polarisation sont disposés dans une profondeur de champ d'un plan ou de plans de masque optique conjugués, et
dans lequel l'aménagement optique est conçu pour atteindre, dans un plan d'image suivant, une valeur de lumière d'une amplitude pouvant être prédéterminée et d'une polarisation pouvant être prédéterminée;
dans lequel l'aménagement optique présente un filtre passe-bas optique destiné à limiter une intensité de diffraction dans un plan de pupille qui est dimensionné de sorte que deux pixels adjacents ou plus du modulateur de lumière de surface soient superposés pour obtenir un pixel effectif dans le plan d'image.

19. Aménagement optique selon la revendication 18, dans lequel l'aménagement optique présente par ailleurs un élément de phase (120; 220; 320; 420) qui est conçu pour provoquer au moins deux contributions de phase ou plus sur des pixels de modulateur adjacents.
